# EUROPEAN PATENT APPLICATION

(11) **EP 1 176 498 A2**
(43) Date of publication of application: **30.01.2002**
(21) Application number: 01306354.0
(22) Date of filing: 24.07.2001
(51) Int. Cl.: G06F 3/023

(54) **Mouse or track ball connection to the computer via a keyboard**

(30) Priority: 24.07.2000 DE 20012762 U
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

Assembly of independent mouse or trackball device using keyboard as an operational relay with keyboard, more specifically it provides for the coupling of a mouse or trackball device featuring wired or wireless outputting to a keyboard assembly featuring likewise wired or wireless output, serving an operational relay, said coupling being of a wired mode using conductor leader or photo guide means, executed directly or by the intervention of socket/plug assembly or alternatively of a wireless mode utilizing ultrared or R.F. or supersonic medium, or coupling be executed with the keyboard by frictional displacement or sensitized displacement, floating coupling rather than structural assembly, in an effort to maintain freedom of separate utility and reduction of the number of leader or wire in use, or leader length requirement, whereby the mess or kink or scramble due to leader or wire multiplicity on the desk top, component to component shielding or interference is prevented or eliminated altogether, achieved thereby is rationalized desktop layout and comfortable working environment to the user.

## Description

### BACKGROUND OF THE INVENTION

### (a) Field of the Invention

Assembly, in the form of integrated system, comprising: independent mouse or trackball device using keyboard as an operational relay and the keyboard, to offer a rational, clean desktop layout, said mouse or trackball device being conventional board interfacing of electro-mechanic, optic, inductive piezoelectric, capacitive, or static mode, with or without a ball.

### (b) Description of the Prior Art :

Keyboard or mouse, or trackball has for long been a convenient means of interfacing control of input of computerized data, conventionally, coupling of the main computer unit with keyboard or mouse, or trackball is made either through wired coupling or wireless coupling, with wired coupling largely in the form of an independent leader outgoing from the keyboard or mouse, or track ball leading to the main unit, or alternatively in the form of a common construction embodying the main unit with the keyboard, the mouse, or the trackball. As regards wireless coupling, it refers to wireless transmission coupling which involves a receiver which is independently built or a common utility, incorporated internally or externally, to provide cursor operation capability or scroll capability or key-in capability; a pity with such conventional execution whereby a main unit is associated with the keyboard, the mouse or the trackball, is that due to wire multiplicity, prolonged wire reachout distance, what will happen easily and often is that wires get mixed with each other in a mess, in a kink, while on the part of wireless coupling, higher cost is a sure thing, on the one hand, component to component interaction will give occasion to shielding and interference, on the other hand.

### SUMMARY OF THE INVENTION

The primary object of the invention, therefore, is to provide a compound system of assembly of independent mouse or trackball device using keyboard as an operational relay with keyboard, whereof the operational relay is in the form of a keyboard set with wired or wireless output to run way between a mouse or trackball device serving wired or wireless transmission and the main unit o the receiver, a means as such helps to minimize leader quantity or leader length, mess or litter or kink on the desktop due to leader multiplicity or redundancy, and to prevent component to component shielding or interference, so that the operational layout on the desktop may look clean, neat and wholesome on the whole.

A further object of the invention is to provide a compound system of assembly of independent mouse or trackball device using keyboard as an operational relay with keyboard, whereof the coupling is executed by a variety of alternatives including: direct coupling by means of electrically conductive leader, or optic guide means, or else wired coupling by means of conductive plug/socket union, or still wireless coupling through ultrared, R.F. or supersonic transmission; or still floating coupling in the form of mechanical friction rolling displacement or sensitized displacement with respect to the keyboard, which is essentially other than a common construction assembly so that independent utility is assured at liberty.

### BRIEF DESCRIPTION OF THE DRAWINGS

Fig. 1 is an illustration of a wired coupling embodiment of the invention with coupling sockets installed on either side of the relay keyboard;
Fig. 2 is an illustration of a wired coupling embodiment of the invention with a coupling socket installed way centrally in the relay keyboard;
Fig. 3 is an illustration of a wired coupling embodiment of the invention with a coupling socket installed on the left side of the relay keyboard;
Fig. 4 is an illustration of a wired coupling embodiment of the invention with a coupling socket installed on the right side of the relay keyboard;
Fig. 5 is an illustration of a wireless execution where ultrared is employed for coupling purposes with one set of ultrared detector installed on either side of the relay keyboard, pursuant co the invention;
Fig. 6 illustrates an embodiment where one or more set of optic hood serving the purpose of light guide is installed on one or both sides of the relay keyboard, for coupling to an ultrared detector in relation to the receiving unit;
Fig. 7 is an illustration of the execution in which two sets of ultrared receiver ckt. device and ultrared detectors are concurrently installed on both sides of the relay keyboard;
Fig. 8 illustrates an instance where one set of ultrared receiver ckt. device is equipped with one set or two of ultrared detector, pursuant to the invention;
Fig. 9 illustrates the invention in one embodiment in which the relay keyboard casing is coupled with: push-pull type ultrared blocking board or snap-on type ultrared blocking board or solenoidal suction type ultrared blocking board or closable ultrared blocking board to effect selective isolation with respect to chosen windows in view of operational circumstances;
Fig. 10 illustrates the invention in one embodiment in which a signal receiving/transmission channel incorporating reflectors on the inner wall thereof is provided on one or more side of the relay keyboard for coupling with the ultrared sensor unit which forms part of the ultrared receiving ckt. device;
Fig. 11 illustrates the invention in an embodiment in which two sets of ultrared emission ckt. device are respectively installed at chosen angular settings on ultrared wireless mouse or trackball device;
Fig. 12 illustrates the invention in one embodiment in which one set of supersonic sensor is installed on either side of the relay keyboard;
Fig. 13 illustrates the invention in one embodiment in which one or both sides of the relay keyboard is integrated with one or more set of sound guide device capable of sound wave transmission for coupling with correspondent supersonic sensor on the part of the receiving device;
Fig. 14 illustrates the invention in one embodiment in which two sets of supersonic receiving ckt. devices and supersonic sensors are concurrently provided, one set by one set, on either side of the relay keyboard;
Fig. 15 illustrates the invention in one embodiment in which a sound wave passage channel is installed on one or more side of the relay keyboard, and that for coupling with the supersonic sensor that forms part of the supersonic receiving ckt. device;
Fig. 16 illustrates the invention in one embodiment in which one set of supersonic receiving ckt. device is equipped with one or two sets of supersonic sensor units;
Fig. 17 illustrates the invention in one embodiment in which one set of supersonic receiving ckt. device, supersonic sensor unit being included, is matched to one set or two sets of supersonic sensor devices;
Fig. 18 illustrates the invention in one embodiment in which either side of the relay keyboard is, where required, selectively equipped with one or more sets of supersonic receiver ckt. devices;
Fig. 19 illustrates the invention in one embodiment executed for R.F. coupling purposes;
Fig. 20 illustrates the invention in one embodiment in which various assembling techniques, including locking, engagement, bonding, binding or absorption are employed to leave the wireless receiving devices and relay keyboards as individually housed units when meant for innumerable wireless coupling applications;
Fig. 21 is a side view sketch of the illustration given according to Fig. 20;

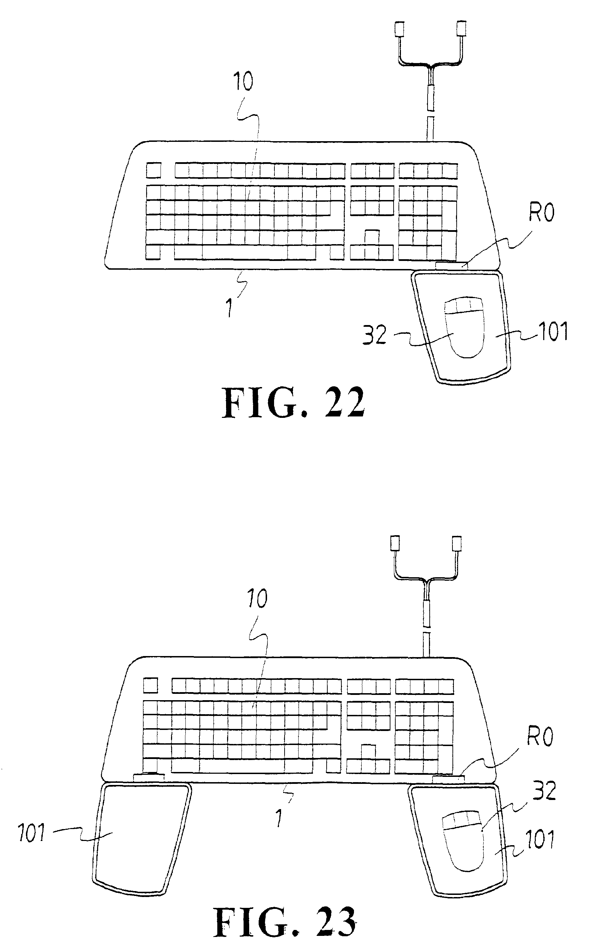

Fig. 22 illustrates the invention in one embodiment in which a one-piece mouse padding structure forms an integral part of a chosen side of the relay keyboard;
Fig. 23 illustrates the invention in one embodiment in which a one-piece mouse padding structure is integrally equipped on either side of the relay keyboard;
Fig. 24 illustrates the invention in one embodiment in which a one-piece mouse padding structure is integrated on one side at a chosen angular setting of the relay keyboard;
Fig. 25 illustrates the invention in one embodiment in which a one-piece mouse padding structure is integrated concurrently one either side, at a chosen angular setting, of the relay keyboard;
Fig. 26 illustrates the invention in one embodiment in which the mouse padding structure is fitted by detachable assemblage onto either side of the relay keyboard;
Fig. 27 illustrates the invention in one embodiment in which the mouse padding structure is fitted detachably to either side of the relay keyboard;
Fig. 28 illustrates the invention in one embodiment in which the mouse padding structure where employed is pliably and movably bound to a chosen side of the relay keyboard;
Fig. 29 illustrates the invention in one embodiment in which the mouse padding structure where employed is pliably and movably bound to either side of the relay keyboard;
Fig. 30 illustrates the invention in one embodiment in which the mouse padding structure where employed is pliably and movably attached to a chosen side of an edgewise wall on the bottom of the relay keyboard;
Fig. 31 illustrates the invention in one embodiment in which the mouse padding structure where employed is pliably and movably attached to either side of an edgewise wall on the bottom of the relay keyboard;
Fig. 32 illustrates the invention in one embodiment in which a retainer means is provided independently on a chosen side of the relay keyboard to facilitate fitting of a wired, wireless mouse or track ball device thereto;
Fig. 33 illustrates the invention in one embodiment in which one or more access hole is provided on the relay keyboard panel to facilitate fitting of a mouse padding structure;
Fig. 34 is a bottom view of what is illustrated pursuant to Fig. 33;
Fig. 35 illustrates the invention as to selective operation of ultrared emission elements by means of a switching means provided to govern the parallel operacion of the ultrared emission ckt. device associated with the ultrated wireless mouse or track ball device accomplished of preparation;
Fig. 36 illustrates the invention whereof the ultrared emission ckt. device linked to the ultrared wireless mouse or track ball device is executed to be a switchable ultrared emission ckt. device;
Fig. 37 illustrates the invention whereof the ultrared emission ckt. device for the ultrared wireless mouse or trackball device is executed to accommodate dual switching mode of operation;
Fig. 38 illustrates the invention whereof the ultrared emission ckt. device for the ultrared wireless mouse or trackball device, prepared in order, is subjected to parallel operation by the introduction of a switching means to permit selective operation of supersonic emission elements;
Fig. 39 illustrates the invention whereof the supersonic emission ckt. for the supersonic wireless mouse or trackball device, prepared in order, is executed to be switchably functional;
Fig. 40 illustrates the invention whereof the supersonic emission ckt. device for the supersonic wireless mouse or trackball device is executed to be admissive of simultaneous switching at the same time;
Fig. 41 illustrates the invention to the effect that the mechanism meant for adjustment of the angle of inclusion in the azimuthal direction correlating the direction of emission with the direction of reception is shown as such;
Fig. 42 illustrates, according to the invention, the structure of the mechanism meant for adjustment of the pitch of borh the direction of emission and the direction of reception;
Fig. 43 illustrates, according to the invention, the mechanism which permits spheroidal, universal adjustment of the direction of emission and the direction of reception;
Fig. 44 illustrates, according to the invention, ultrared or supersonic orientation deflector assembly with respect to which the direction of emission and the direction of reception may be adjusted to yield a desired angle of inclusion corresponding to horizontal deflection occasioned by both or either said direction;
Fig. 45 illustrates, according to the invention, an ultrared or supersonic orientation deflection assembly whereby the direction of emission or direction of reception may have their respective pitch of deflection adjusted vertically;
Fig. 46 illustrates, according to the invention, ultrared or supersonic orientation deflection assembly whereby the direction of emission and direction of reception may have their respective deflections adjusted spheroidally universally.

### DETAILED DESCRIPTION OF THE PREFERRED EMBODIMENTS

The invention titled assembly of independent mouse or trackball device using keyboard as an operational relay with keyboard provides in substance a keyboard assembly serving to couple a mouse or trackball device in charge of wired or wireless output from which the same is to be output, that is, a keyboard assembly in control of wired or wireless output to account for an operational relay way between the mouse or track ball device meant for wired or wireless transmission and the main unit or and the receiver.

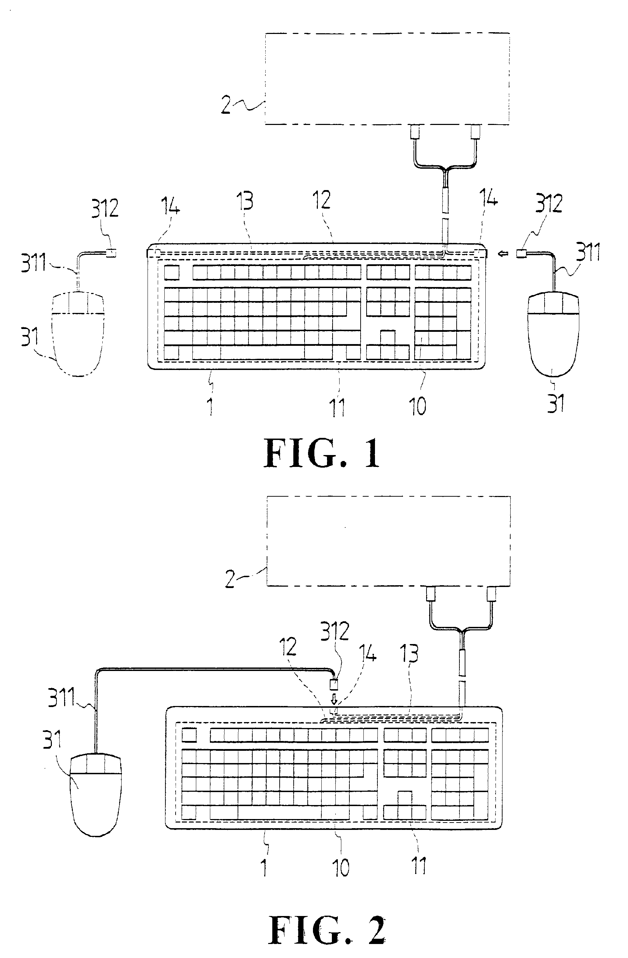

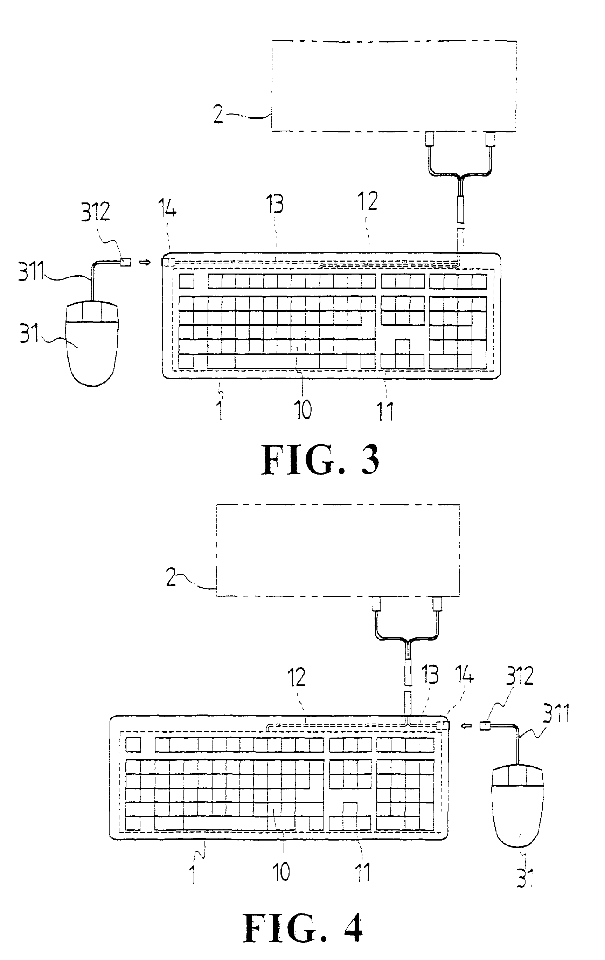

In Fig. 1 through Fig. 4 shown below are illustrated a wired coupling mode of the invention assembly of independent mouse or trackball device using keyboard as an operational relay with keyboard, comprises essentially:
- Relay keyboard 1, which incorporates exteriorly pushkey 10 featuring selection capability, and interiorly a pushkey ckt.11 which corresponds with each pushkey 10, said pushkey ckt.11 being linked by way of keyboard transmission leader 12 to the main unit 2;
- Relay leader 13, mounted in a chosen position inside the relay keyboard 1, linked to main unit 2 by way of a row of leader in parallel with keyboard transmission leader 12 or alternatively coaxially in a multiple core cable, directly or by means of socket, plug sets; to be connected by means of similar type or dissimilar type of conventional PS2, USB, SERIES or special purpose interfacing socket 14 to relay leader 13, in parallel or through coupling interfacing on both sides of the relay keyboard 1, as shown in Fig. 1, or on a chosen central location, as shown in Fig. 2, or on the left side(per Fig. 3), or on the right side(per Fig. 4), as dictated by the specific requirement relevant to the case;
- An independently equipped wired mouse or trackball means 31, with one end of its transmission leader 311 furnished with a plug 312 capable of coupling with aforementioned coupling socket 14;

Structured accordingly, it is possible to insert the plug 312 of the independently equipped wired mouse or trackball device 31 selectively into the coupling socket 14 to which relay leader 13 is associated, thus achieving reduction in leader quantity or reduction in total length of transmission leader 311 sourced to a wired mouse or trackball device 31, and that means elimination of the mess on desktop due to the presence of leader multiplicity.

In the subject assembly of independent mouse or trackball device using keyboard as an operational relay with keyboard, execution of wired coupling way between the mouse or trackball device and the relay keyboard is either direct coupling using conductive leader or optic leader, that is, photofibre, or alternatively through wired coupling by means of conductive plug, socket assembly;

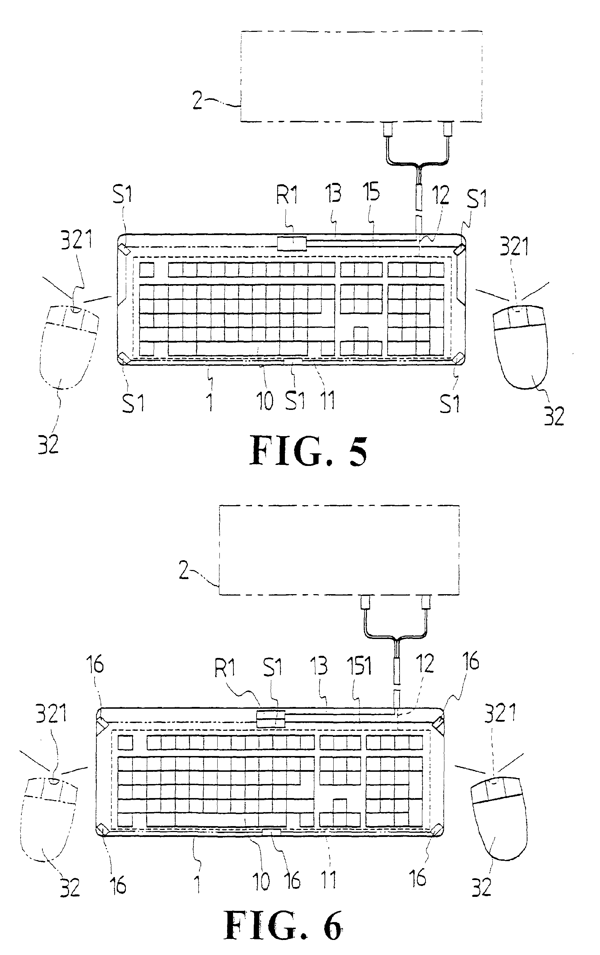

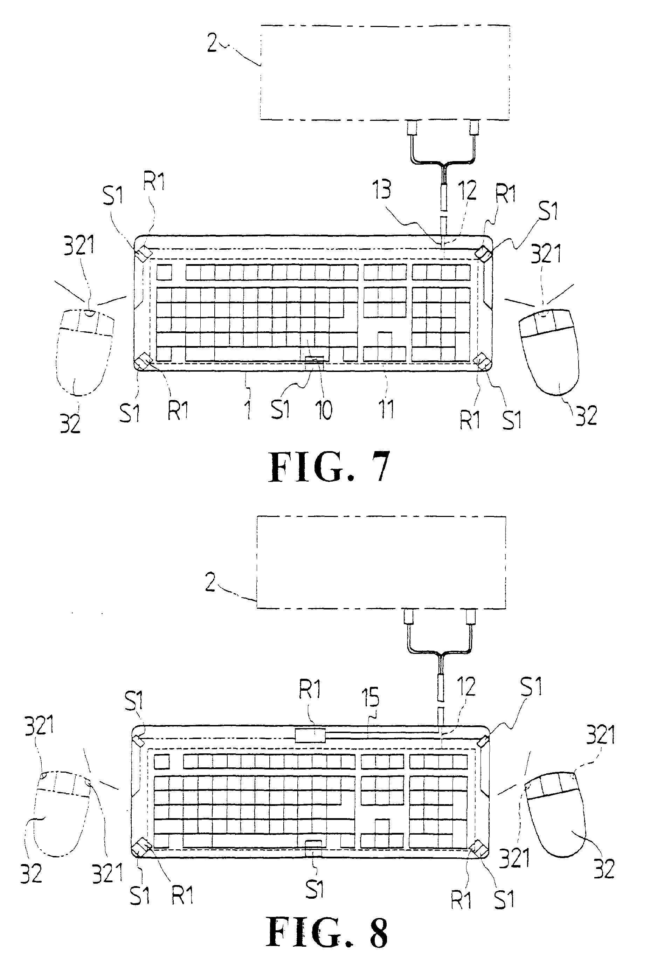

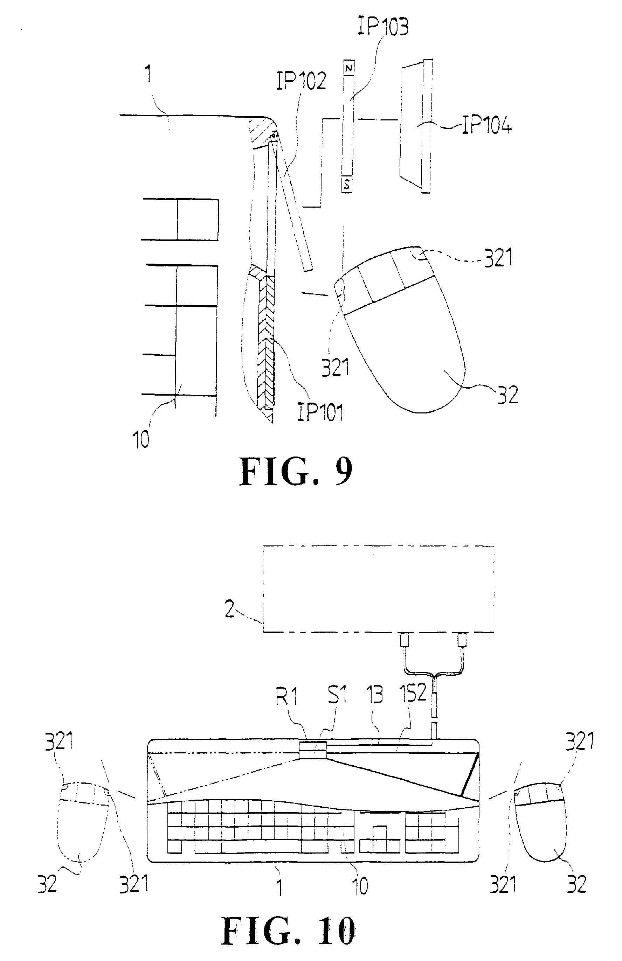

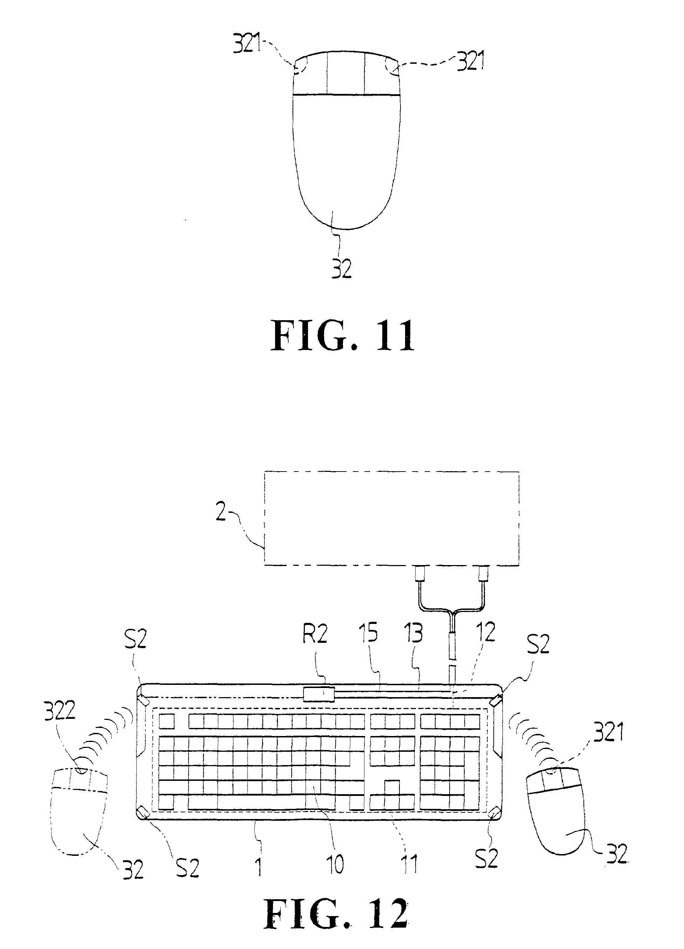

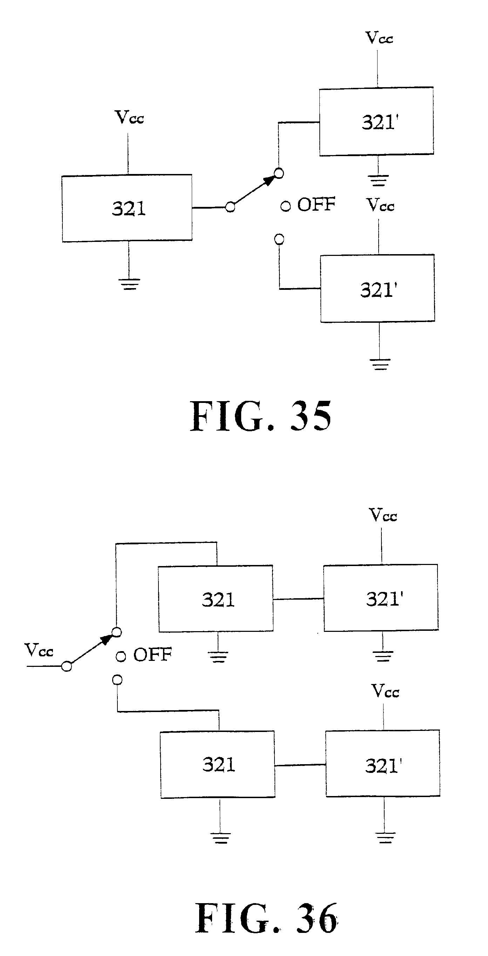

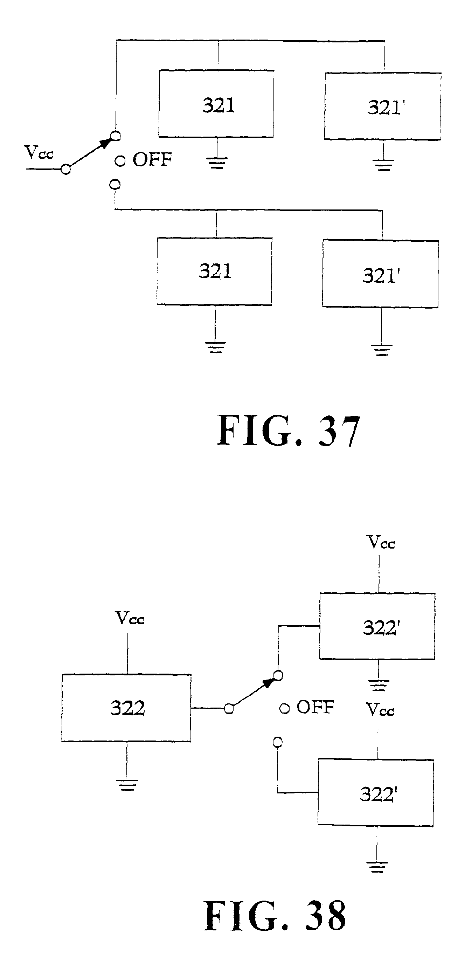

Implementation of the subject assembly of independent mouse or trackball device using keyboard as an operational relay with keyboard by the Intervention of wireless ultrared coupling is exemplified in Fig. 5 through Fig. 10, covering a number of embodiments whereof the essential components include:
- a relay keyboard 1, which incorporates exteriorly pushkey 10 featuring selection capability, and interiorly a pushkey ckt.11 which corresponds with each pushkey 10, said pushkey ckt.11 being linked by way of keyboard transmission leader 12 to the main unit 2;
- Relay leader 13, mounted in chosen location inside the relay keyboard 1, whereof one end is connected to the ultrared receiver R1, and the other end, in the form of a row in parallel with the keyboard transmission wire 12 or alternatively in common with a plural core cable, in that manner being extended to be connected straight to, or by the intervention of socket/plug assembly, to the main unit 2; said receiver R1 being equipped with a conductor means 15 to supply one or more set of ultrared sensor S1 installed on one or more sides of the relay keyboard 1, said ultrared sensor S1 being available for parallel operation or equipped with a switching means to effect selective operations; what is shown in Fig. 5 is rightly one execution of the one set of ultrared sensor S1 that is being furnished on either side of the relay keyboard 1 prosecuted according to the invention; the same said ultrared sensor S1 being optionally concealed or exposed onto a chosen wall of the relay keyboard 1, and that at a suitable slope with a view to facilitate coupling to the signal that is being emitted form or received at the ultrared wireless mouse or trackball device 32 to be described further hereinafter; or still as illustrated in Fig. 6, an embodiment of the invention whereof one or more set of photo guide hood 16 being furnished on one or more side of the relay keyboard 1 is interconnected by means of a photo guide means 151 which is made of photo guide materials such as photo fibre or luminescent board to assume slit or piece or otherwise geometric form, to a correspondent ultrared sensor S1 equipped on the receiver R1, comprising: one set of ultrared receiver R1, one set of ultrared sensor S1, and a photo guide hood 16 furnished on one or more side of the relay keyboard 1, said hood 16 being connected by means of a photo guide means 151 that is made of luminescent materials to the correspondent ultrared sensor S1, to facilitate ultrared, wireless coupling with ultrared wireless mouse or trackball device 32, or still as illustrated in Fig. 7, in a structure comprising two or more sets of ultrared receivers R1 and ultrared sensor S1 concurrently furnished on two or more sides of the relay keyboard R1 the operation may be designed to run in parallel or selectively by the intervention of a switch, or still in the illustration given in Fig. 8, in a structure comprising at least one set of common ultrared receiver R1 and an over-riding number of ultrared sensor S1, the said ultrared sensor S1 may be attached to two or more sides, at chosen angular setting, of the relay keyboard 1, and may be run to operate in parallel or through a selective switch to operate in common with the ultrared receiver R1; or still as illustrated in Fig. 9, given of the photo guide hood 16 described in Fig. 5 through Fig. 8, whereof further characteristic feature includes structural layout lying on a chosen side of the relay keyboard 1, attached at a chosen angular setting, which can where needed be processed to yield a terminal side serving the purpose of a focussing lens, and laid in a recess further beyond lateral sides of the casing in an effort to reduce interferences; whereas on the ultrared access port of the casing may be furnished as coupling to the casing push-pull type ultrared blocking board IP101, or snap-on type ultrared blocking board IP102, or solenoidal sucking type ultrared blocking board IP103, or still closable ultrared blocking plug IP104, serving equally to selectively isolate a portion of the access ports in view of operational environments, to minimize interferences; or still as illustrated in Fig. 10, it is feasible to have an ultrared signal access channel 152 of which the inner wall exhibits deflection capabilities as provided on a chosen side or more sides of the relay keyboard R1 whereby coupling is made to the ultrared sensor S1 in relation to the ultrared receiver R1, so that signal being emitted from the transmitter 321 for the ultrared wireless mouse or trackball device may get straight to said ultrared signal access channel 152, so that by way of afore-mentioned deflector wireless coupling is made to the ultrared sensor S1 and the receiver R1; said ultrared signal access channel 152 being available in the form of a casing, whereof the inner wall is vacuum plated into a deflector surface or finished with deflective paint or otherwise paint, or alternatively prepared by bonding onto or sleeving into deflective metal pieces, or prepared by any means capable of accommodating ultrared deflections; the ultrared signal access channel 152 may have its port processed into a trumpet form to set receiving orientation, so as to minimize interferences; in addition it is feasible to have the access port of the ultrared signal access channel 152 provided with a push-pull type ultrared blocking board IP101, or snap-on type ultrared blocking board IP102, or solenoidal suction type ultrared blocking board IP103 or closable ultrared blocking plug IP104, each capable of being coupled to the casing, like what is shown in Fig. 9, serving to effect selective blocking of the access port partially, so that interference is minimized;
- Independently installed ultrared wireless mouse or trackball device 32, which, in addition to incorporating one set of ultrared emitter 321 whereof the ultrared emission elements 321' consist straight of LED and similar elements; may further incorporate one or more photo guide means 151 on the casing of said ultrared wireless mouse or trackball device 32 as shown in Fig. 6, to realize two or more ultrared emission orientation; or as shown in Fig. 10, one or more ultrared signal access channel 162 may be additionally incorporated onto the casing of ultrared wireless mouse or trackball device 32, to realize two or more ultrared emission orientations; while the access port can be any of the push-pull type ultrared blocking board IP101, or snap-on ultrared blocking board IP102, or solenoidal suction ultrared blocking board IP103 or a closable ultrared blocking plug IP104 meant for coupling with the casing, like what is shown in Fig. 9, to effect partial obstruction of the access port where justified in view of operational environments with a view to minimize interferences; further it is also practicable to install, at chosen angular setting, two sets or more sets of ultrared emission elements 321' onto the ultrared mouse or trackball device, what is shown in Fig. 11, sharing a same set of ultrared emitter 321, or alternatively to install one set or more sets of a combination of ultrared emission elements 321' and ultrared emitter 321 with the ultrared emission elements being available for parallel operation where needed or selective operation by the intervention of a switch to be provided for the purpose, or the ultrared emission elements 321' may be switched as illustrated in Fig. 36, for selective operation or set for parallel operation; or still as shown in Fig. 36, a switchable ultrared emission ckt. 321, or still as shown in Fig. 37, a version accommodating switch of both at the same time to facilitate remote control electively, on the right side, or on the left side;

Structured accordingly, it will be possible to transmit signal from the ultrared emission ckt. 321 in relation to the independently installed ultrared wireless mouse or trackball device 32 to any of aforementioned utrared sensor S1 for interception, and transfer to receiver R1, thus making a wireless coupling whereby keyboard 1 serves as an operational relay, clear and free of component to component shielding and interference, so that its distribution layout may help to strike a clean and neat desktop environment.

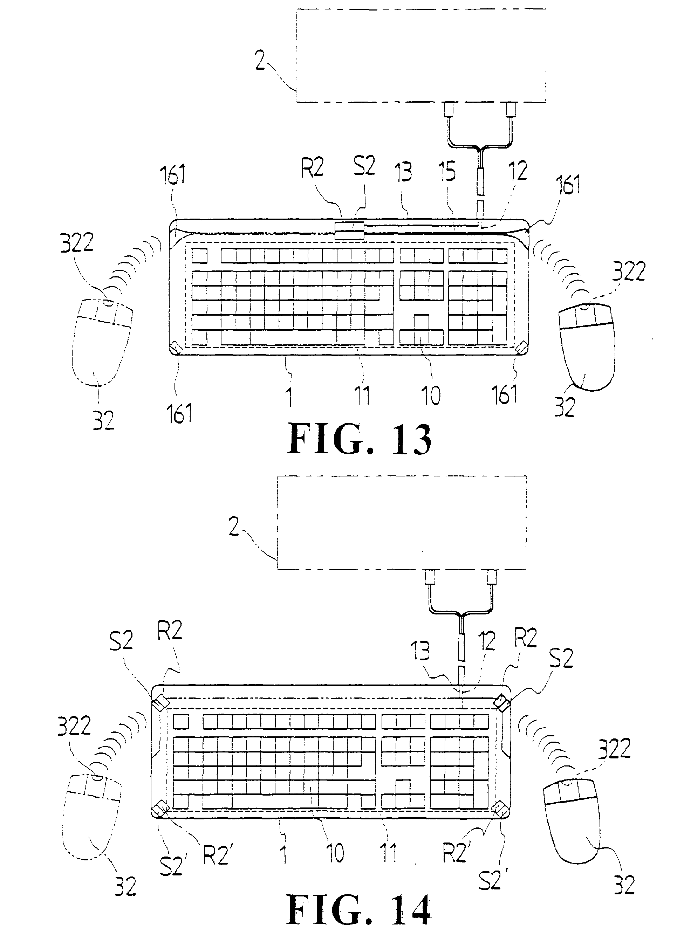

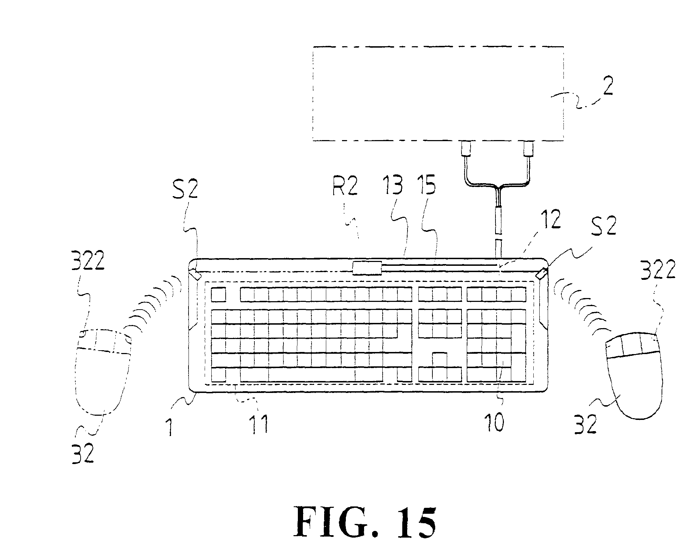

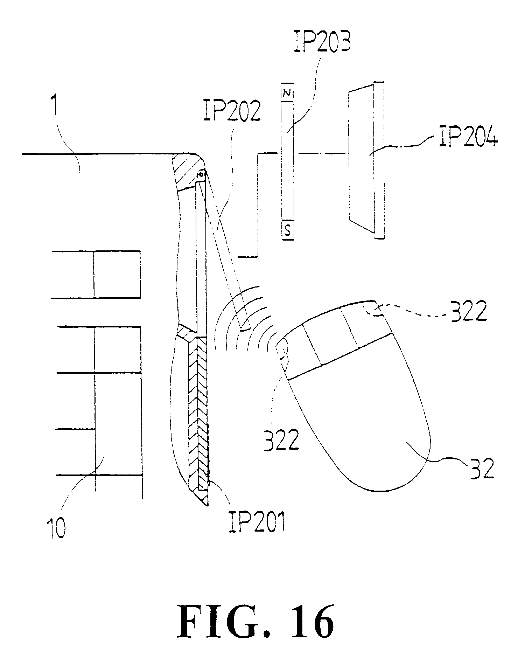

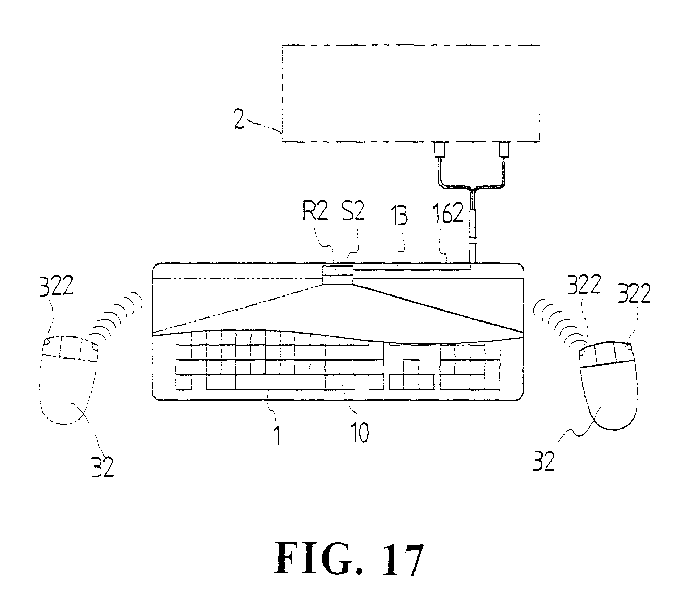

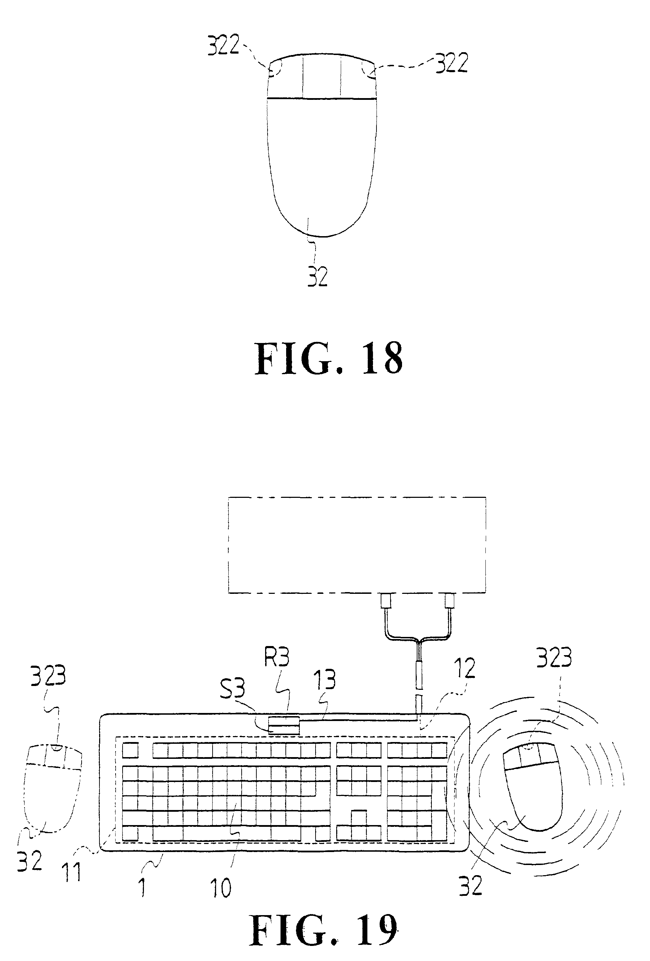

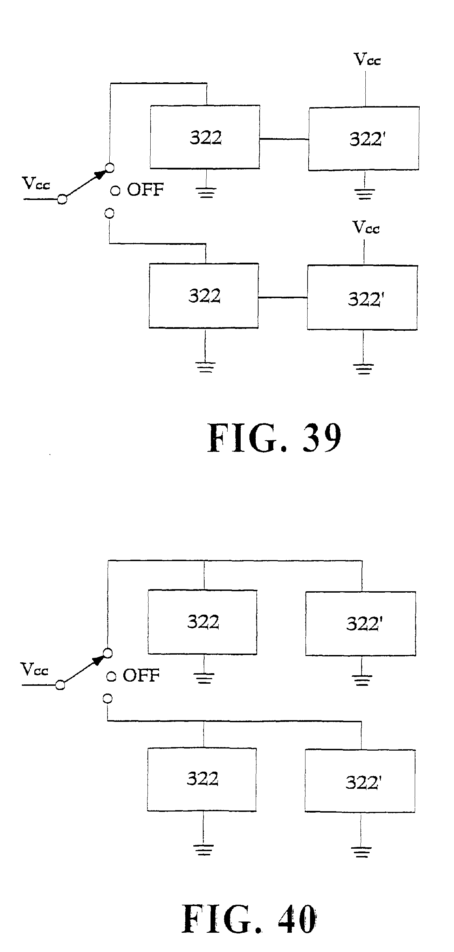

Other embodiments of the invention assembly of independent mouse or trackball device using keyboard as an operational relay with keyboard applied in supersonic wireless coupling technique, as illustrated in Fig. 12 through Fig. 18, comprise essentially:
- Relay Keyboard 1, which incorporates exteriorly a functional pushkey 10, and interiorly an pushkey ckt.11 corresponding to each pushkey 10, said pushkey Ckt.11 is further linked to the main unit 2 by a keyboard transmission leader 12;
- Relay leader 13, furnished at a chosen location inside the relay leader 1 whereof one end is connected to the supersonic receiver R2, at the other end, in a row in parallel with keyboard transmission wire 12, or in common with a plural core cable, is extended for direct connection with, or by way of socket/plug assembly to main unit 2, said receiver R2 being furnished with conductor means 15 to supply the one set or more of supersonic sensor S2 provided on one or more side of the relay keyboard 1, said supersonic sensor S2 being executed for parallel operation where such is needed or for selective operation by the intervention of a switch; shown in Fig. 12 is an instance of the invention where one set of supersonic sensor S2 is installed on either side of the relay keyboard 1; said same supersonic sensor S2 being either concealed or exposed in a chosen edgewise wall of the relay keyboard 1, and where justified, endowed with a suitable slope to facilitate coupling to the emission or reception of a signal transmitting at a supersonic wireless mouse or trackball device 32 to be described hereinafter; or still a shown in Fig. 13, a sound guide means 161 compose of one set or more set of sound wave transmitting materials, and in slit form, piece form or otherwise geometric configuration furnished on one or more sides of the relay keyboard 1, for coupling to a supersonic sensor S2 correspondent with the receiver R2, in this instance the embodiment includes one set of supersonic receiver R2 and one set of supersonic sensor S2; while a sound wave transmitting means 161 is provided on one or more sides of the relay keyboard 1 for running to a correspondent supersonic sensor S2 so as facilitate supersonic wireless coupling with supersonic wireless mouse or trackball device 32; or still, as shown in Fig. 14, in this instance two or more sets of supersonic receiver R2 and supersonic sensor S2 are concurrently installed on both sides or more sides of the relay keyboard 1, and in respect of which operation may be executed in parallel or selectively with a switch; or still in the embodiment as shown in Fig. 15, comprising at least one set of common supersonic receiver R2 and relatively plural sets of supersonic sensor S1 with aforementioned supersonic sensor S2 being available for attaching, at a chosen angular setting, to two or more sides of the relay keyboard 1, and being run for parallel operation or through a switch for interaction with supersonic receiver R2, or still in the embodiment pursuant to Fig. 16, covering the sound transmission means 161 described in reference with Fig. 12 through Fig. 15, the further characteristic feature lies in attachment at a chosen angular setting to a chosen side of the relay keyboard 1, also in the preparation of an end surface capable of focussing sound waves, set at a recess into a broad side of the casing so as to minimize interferences; while at the supersonic access port of the casing may be further provided a push-pull type supersonic blocking board IP201 or snap-on type supersonic blocking board IP202, or solenoidal suction type supersonic blocking board IP203, or still closable supersonic blocking plug IP204 which is coupled to the casing, so as to effect optional blocking with respect to part of the access port, so that interference is kept to the minimum; or in the embodiment executed under Fig. 17, it is also feasible to provide on a chosen side or more sides of the relay keyboard 1, a supersonic signal access channel 162 of which the inner wall exhibits deflection capabilities so as to effect thereby coupling with the supersonic sensor S2 in relation to the supersonic receiver R2, so that signal oncoming from a supersonic wireless mouse or trackball device 32 via the emitter 322 may be emitted to the above-mentioned supersonic signal access channel 162 whereby transmission thanks to its deflection capabilities will form supersonic wireless coupling with supersonic sensor S2 and receiver R2; said supersonic signal access channel 162 being available in the form of the casing as it is, while the inner wall of the supersonic signal access channel 162 is vacuum plated to be a supersonic deflection surface or finished by supersonic deflection paints or by otherwise paints, or still be prepared by the bonding or sleeving of supersonic deflection metal sheets, or by means otherwise so far as it will deflect any oncoming supersonic wave alright; the aperture of the supersonic signal access channel 162 may assume a trumpet profile to set the orientation of reception, whereby interference is kept to the minimum; in addition it is also feasible to have a push-pull type supersonic blocking board IP201, or a snap-on type supersonic blocking board IP202, or a solenoidal suction type supersonic blocking board IP203, or still a closable supersonic blocking plug IP204 being coupled to the casing such as is shown in Fig. 16, installed at the access port of the supersonic signal access channel 162, to effect partial isolation of the access port in view of operation environments, so that interference is kept to the minimum;
- Independently installed supersonic wireless mouse or trackball device 32 which incorporates, in addition to one set of supersonic emitter 322 which comprises entirely all transducer supersonic emission elements 322' installed at a chosen angular setting; one or more additionally equipped sound guide means 161 on the casing of the supersonic wireless mouse or trackball device 32 as exemplified in Fig. 13, so as to produce two or more supersonic emission orientation; or by the illustration of Fig. 17, one or more supersonic signal access channel 162 is incorporated additionally on the casing of the supersonic wireless mouse or trackball device 32, so as to produce two or more supersonic emission orientations; each access port may be equipped with a push-pull type blocking board IP201, or a snap-on type supersonic blocking board IP202, or a solenoidal suction type blocking board IP203, or still a closable supersonic blocking plug IP204 that is coupled to the casing such as those shown in Fig. 16, so as to facilitate selective isolation of part of the access port where such is justified in view of operation environments, so as to keep interference to the minimum; or still in the illustration of Fig. 18, two or more sets of transducer 322' and a common set of supersonic emitter 322, or one set or more set of supersonic emitter 322 severally equipped with transducer 322' on both sides of the frontal end of supersonic wireless mouse or trackball device 32, or where needed a selectively functioning transducer 322' to be run by a switch, for contingent parallel operation, as shown in Fig. 38, may be prepared, or instead a supersonic emitter 322 switching means such as is shown in Fig. 39, or one permitting concurrent switching such as is exemplified in Fig. 40 to facilitate controlled operation way from the left side or way from the right side;
by all of the above-mentioned components working together, what is made possible is that signal released from the supersonic emitter 322 in relation to the independently installed supersonic wireless mouse or trackball device 32 may be emitted to any of the afore-mentioned supersonic sensor S2 where it is received and picked up, for transmission to the supersonic receiver R2, thus consummating wireless coupling using the keyboard 1 as an operational relay, what is avoided and precluded, prevented is component-to-component shielding and interference, the overall layout is indeed and in fact a desktop environment conducive to wireless transmission.

In the instance exemplified in Fig. 19, for application on various embodiment of wireless R.F. coupling executions of the invention assembly of independent mouse or trackball device using keyboard as an operational relay with keyboard, the essential components include:
- Relay keyboard 1, which consists of operational pushkey 10 on the exterior, and a pushkey ckt.11 correspondent with each operational pushkey 10 on the interior, said pushkey ckt.11 being linked to the main unit 2 by means of a keyboard transmission leader 12;
- Relay leader 13, installed in a chosen location inside the relay keyboard 1, with one end connected to the R.F. receiver R3, and the other end coupled to the main unit 2 by a row of wire in parallel with keyboard transmission leader 12 or alternatively by extension coaxially through a multiple core cable, directly or by the intervention of a socket/plug assembly;
- Independently installed R.F. mouse or trackball device 32, complete with emission ckt. 323 able to emit R.F. signals ;

Structured accordingly, it is possible to transmit signal from the R.F. emission ckt. 323 relative to the independently installed R.F. mouse or trackball device 32 to any of above-mentioned receiver R3, accomplishing wireless coupling whereby keyboard 1 serves as an operational relay, clear and free of component to component shielding and interference, and the layout on the whole sub-serves to the buildup of a clean and neat R.F. desktop environment.

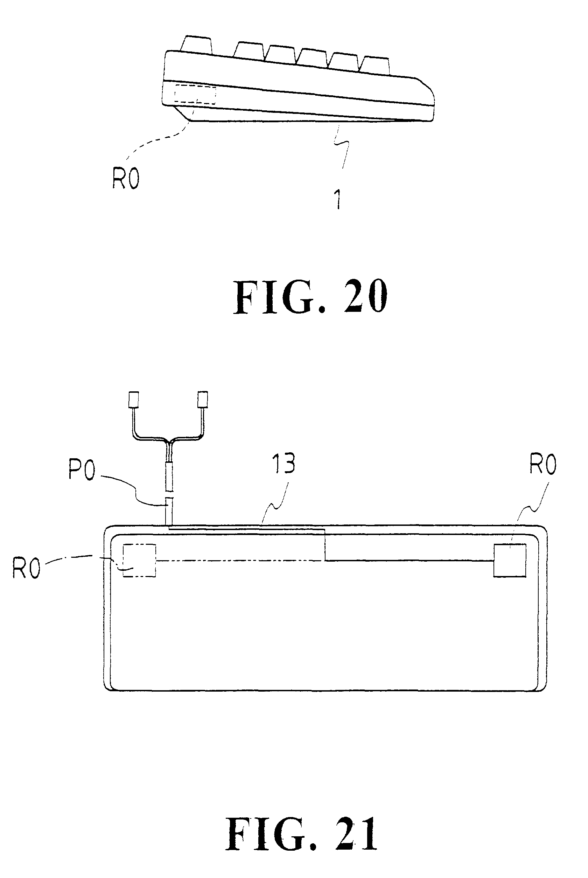

Among all and various instances of execution according to the invention, ultrared or supersonic or R.F. coupling assembly can be in the form as shown in Fig. 20 or Fig. 21 where pertinent, whereof the R.F. receiver R0 which consists of ultrared receive ckt device R1, including ultrared sensor S1, or supersonic receive ckt. device R2, including supersonic sensor S2, or still R.F. receiver R3, may stand alone independent of the relay keyboard 1, but both may be assembled by locking, engagement, bonding, or sucking adhesion, and said R.F. receiver R0 is coupled to the relay leader 13 on the relay keyboard 1 by wiring direct or by the intervention of similar or dissimilar conventional PS2, USB, SERIES or special purpose interface plug, socket assembly P0; or alternatively said R0 may be structured integral with relay keyboard 1, in either case, the location meant for locking, engagement, bonding or suck adhesion on one or both sides of the relay keyboard 1 and similar structure or spacing will ensure that once combined together, either the wireless mouse or trackball device 32 will exhibit good R.F. transmission functioning with respect to the receiver R0 in a setting beneficial to wireless transmission, the same is true spoken of a common composite structure.

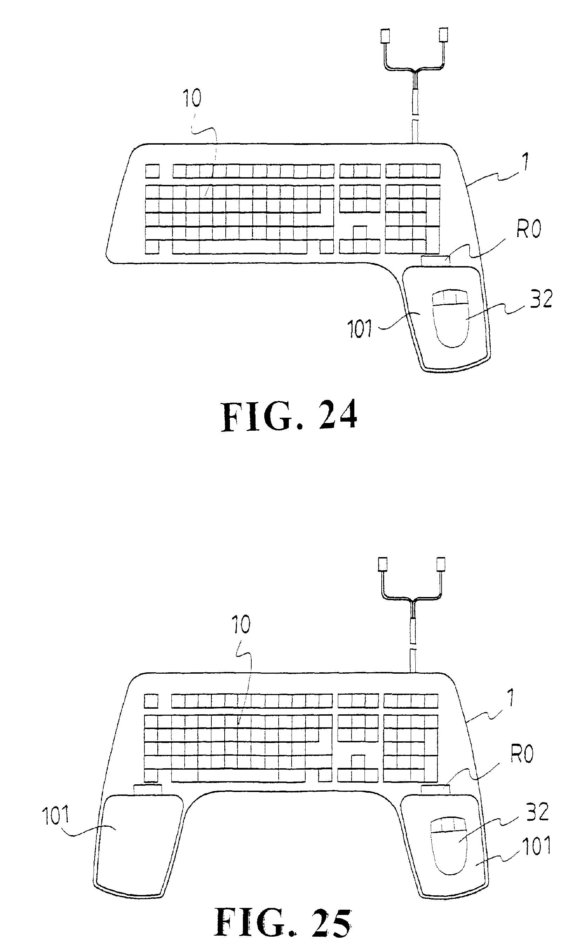

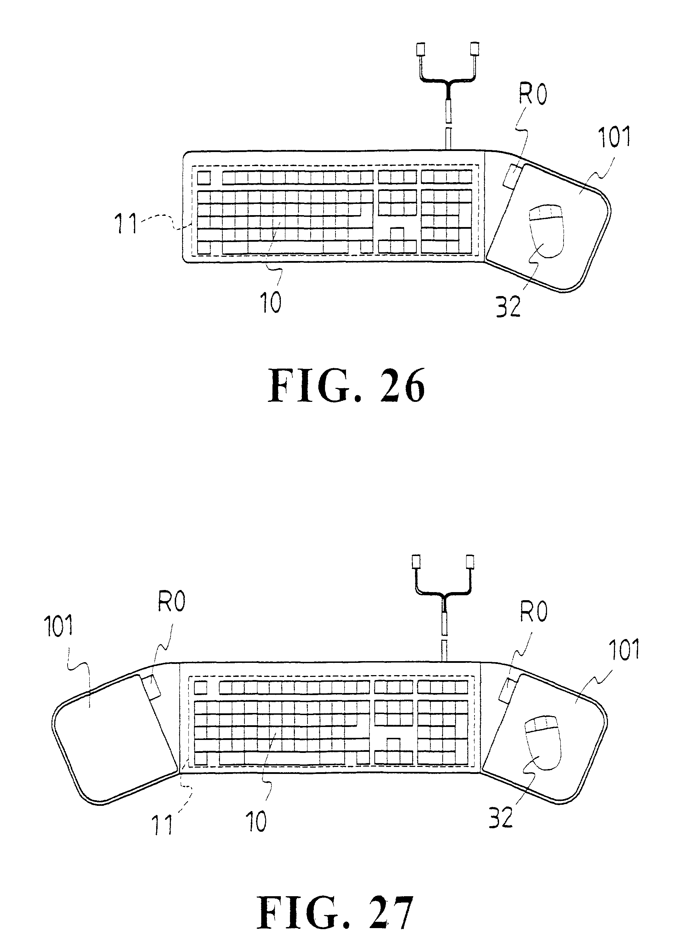

In the implementation of coupling of mouse or track ball device featuring wireless coupling output capability on the part of aforementioned wired or ultrared or supersonic or R.F. to the relay keyboard 1, it is feasible to have an integrally formed or separately assembled mouse padding structure 101 or more of same installed on one or both sides, at a chosen angular setting, of the relay keyboard 1, to serve as an operational platform for the independently installed wireless mouse or trackball device 32; as shown in 22, one sees an instance of a mouse padding structure 101, integrally structured, on a chosen side of the relay keyboard 1; as opposed to Fig. 23 which shows instead an integrally structured mouse padding structure 101 present on both sides of the relay keyboard 1; or still as shown in Fig. 24, is an execution where an integrally structured mouse padding structure 101 is installed on a chosen angular setting on one side of the relay keyboard; or still as shown in Fig. 25 is an execution where an integrally structured mouse padding structure 101 is installed on both sides of a chosen angular setting on either side of the relay keyboard 1; or still as shown in Fig. 26, is an execution where a chosen side of the relay keyboard 1 is installed with a separately assembled mouse padding structure 101; or still as shown in Fig. 27 is an execution where a mouse padding structure 101 is separately assembled on both sides of the relay keyboard 1;

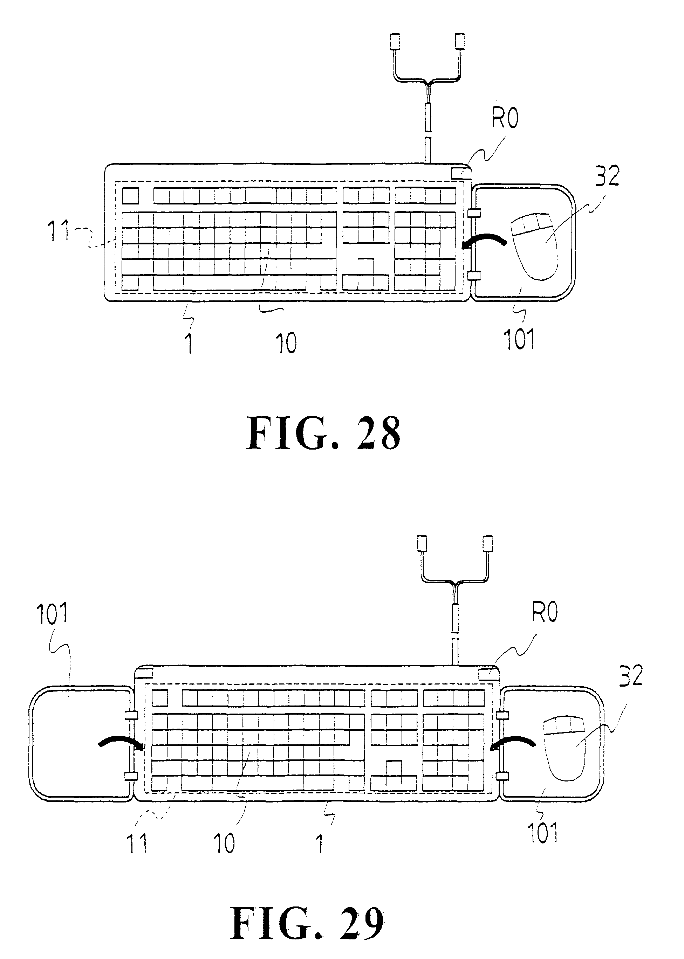

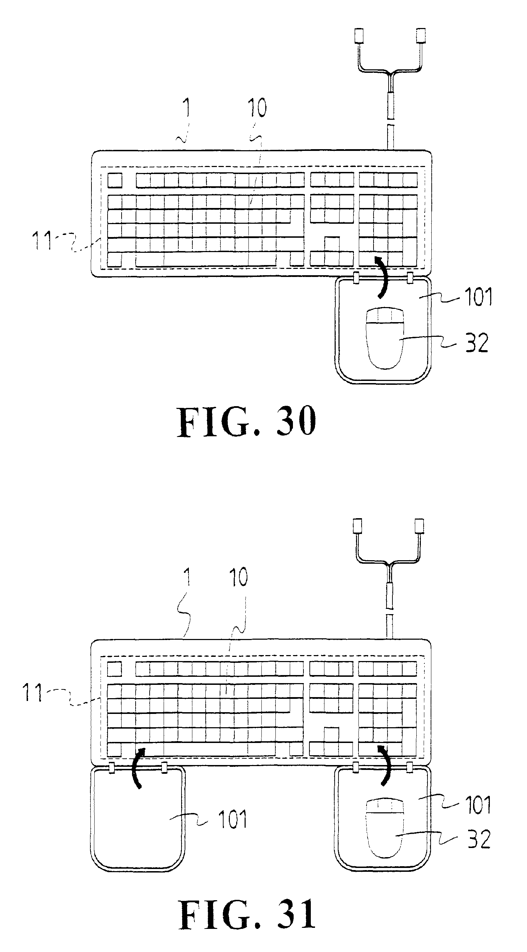

Respecting structural relationship between aforementioned mouse padding structure 101 and the relay keyboard 1, it can be such that both are related to each in freely pliable execution so that the mouse padding structure 101 is movably articulated to a chosen side or both sides of the relay keyboard 1, as shown in Fig. 28, Fig. 29 respectively; or alternatively the mouse padding structure 101 may be movably articulated to a chosen side on the lower edge of the wall of the relay keyboard 1, or else to both sides thereon, as shown in Fig. 30, Fig. 31.

As to possible combination and permutation of various mouse padding structure 101 with the relay keyboard 1, so far as execution of wired coupling is concerned, layout of keyboard transmission leader 12, relay leader 13, coupling socket 14 or conductor assembly 15 may be prosecuted per illustrations covered in Fig. 1 through Fig. 4,
characterized in that the provision of one or more than one coupling socket 14 in parallel array where required on one side or both sides, or a chosen central location of the relay keyboard 1 is designed by symmetry to where it fits for coupling with the plug 312 which goes with a wired mouse or trackball device; where the application relates to ultrared wireless coupling, layout of the ultrared receive ckt. device R1, ultrared sensor S1 being included, shall be prosecuted in accordance with illustrations given in Fig. 5 through Fig. 11, characterized in that the ultrared receive ckt. device R1, ultrared sensor S1 being included, and the ultrared emission ckt. as equipped with the wireless mouse or trackball device are deployed in positions convenient for mutual coupling; by the same token, where the application goes for supersonic wireless coupling, provision of supersonic receive ckt. device R2, supersonic sensor S2 being included, shall be governed by illustrations given in Fig. 12 through Fig. 18, characterized in that the supersonic receive ckt. device R2, supersonic sensor S2 being included, and the supersonic emission ckt. equipped with the wireless mouse or trackball device shall be deployed in positions convenient for mutual coupling; where the application goes for R.F. coupling, installation of R.F. receiver R3 etc., shall be prosecuted in accordance with Fig. 19, characterized in that the R.F. receiver R3 and the R.F. emission Ckt. equipped relative to the wireless mouse or trackball device are deployed at positions convenient for mutual coupling.

In the execution of above-mentioned "Assembly of independent mouse or trackball device using keyboard as an operational relay with keyboard" utilizing wired, or ultrared or R.F. supersonic wireless coupling technique, the same may be prosecuted with said mouse padding structure 101 being of a plane structure, yet, to ensure that while the wireless mouse or trackball device is operating within defined scope, wholesome coupling is maintained between the ultrared or R.F. supersonic emitter 321 or 322 or 323 and the ultrared or R.F. or supersonic sensor S1, S2 or S3, it is advisable to build a notched recess surrounding the mouse padding structure 101, or the notched recess may be reinforced with apron fensing, overall or on the periphery of both sides, so as to facilitate concurrent utility on both sides; the aforementioned single mouse padding structure 101 may be attached to a lateral side, right or left, of the relay keyboard 1, at user's discretion per needs.

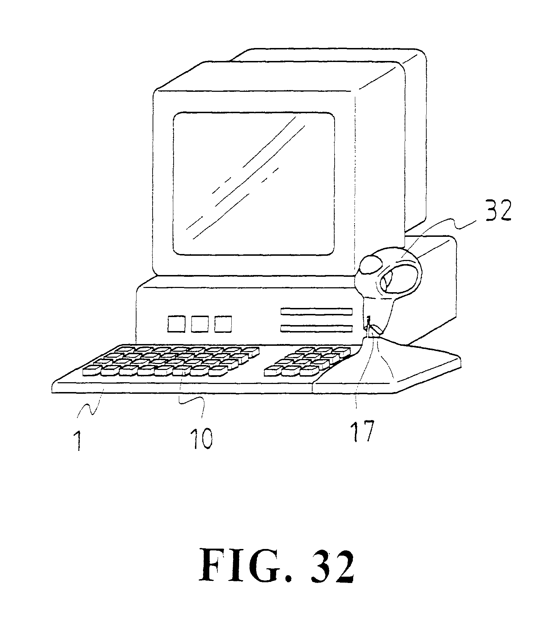

Moreover, the invention may be structured so that the mouse padding structure 101 whichsoever installed on a chosen side of the relay keyboard 1 may incorporate a retainer 17(Fig. 32) to facilitate inlay, clamping of an independently installed wired or wireless mouse or trackball device 31, 32, with respect to which a mouse or trackball device may, once retained thereby, swing about or else.

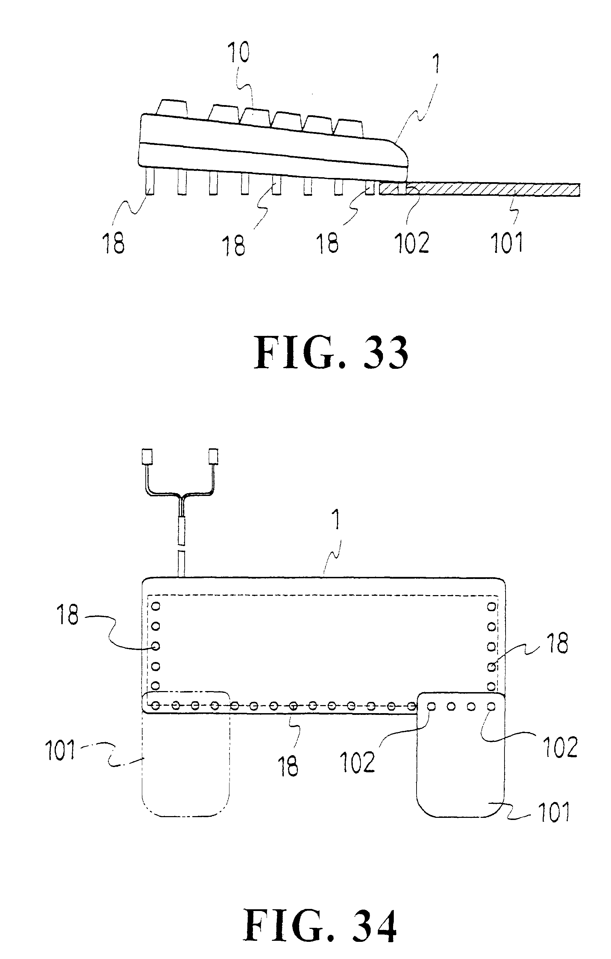

Besides, as shown in Fig. 33 and Fig. 34, the structural correlation between above-mentioned mouse padding structure 101 and the relay keyboard 1 may be such that on a chosen location of the panel side of the independently installed mouse padding structure 101 there be punched one or more access hole 102 while on that lateral wall which is opposite to the bottom of the relay keyboard 1 there be installed one or more coupling pillars 18, into which coupling pillars 18 as related to the relay keyboard 1 the mouse padding structure 101 may be inserted selectively so as to for a match perfect for mouse operations.

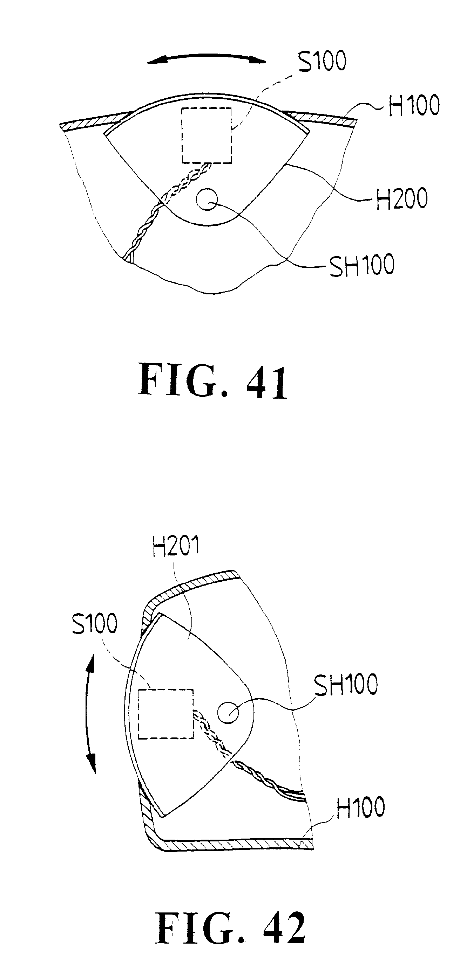

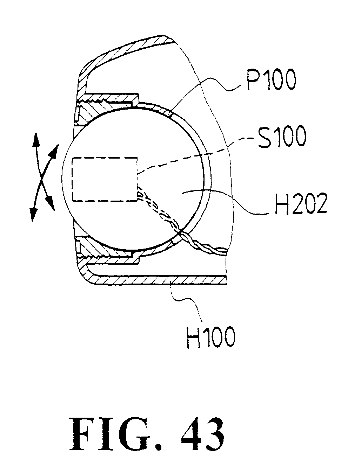

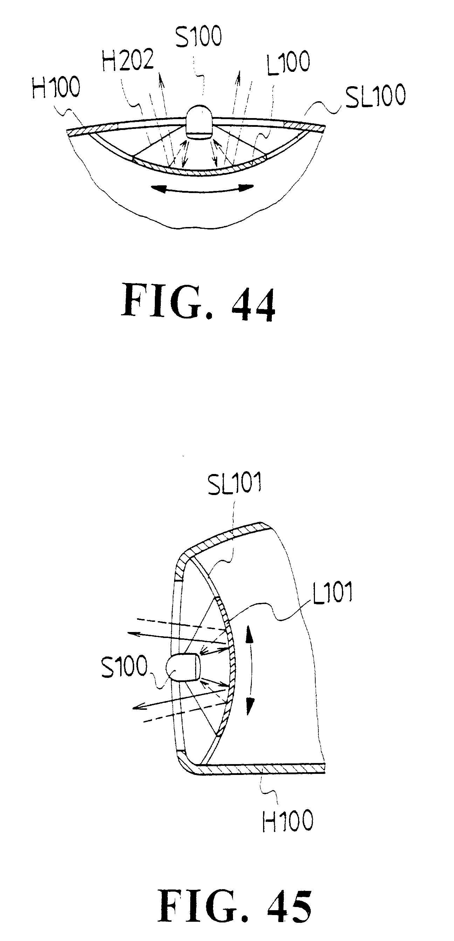

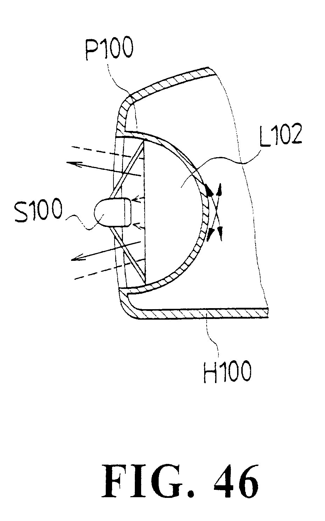

Moreover, to promote he emission/reception interaction way between the directionally sensitive ultrared or supersonic wireless mouse or trackball device 32, on the one part, and the respondent receiver, on the other part, as illustrated in Fig. 5 through Fig. 18, it is preferable to make it functionally available for adjustment of reception/emission angular setting way between (A) the ultrared emission element 321' or a common ckt. shared by it and the ultrared emitter 321, and the wireless mouse or trackball device 32 casing; or (B) the supersonic transducer 322' or a common ckt. shared by it and the supersonic emitter 322, and the wireless mouse or trackball device 32 casing; or (C) the ultrared sensor S1 or a common ckt. shared by it and the ultrared receiver R1, and the relay keyboard 1 casing; or (D) the supersonic sensor S2 or a common ckt. shared by it and the supersonic receiver R2, and the relay keyboard 1 casing; or way between the ultrared sensor S1, or the supersonic sensor S2 and the relay keyboard; which can be in the form of (1) an adjustment seating means indicated for adjustment of horizontal angle of inclusion, exemplified in Fig. 41 is an adjustment setting means accommodating adjustment of horizontal angle of inclusion respecting emission orientation, on the one part, and reception orientation, on the other part, represented by the reference number H200, it is mounted with ultrared emission element 321' or supersonic emission element 322', or ultrared reception element S1 or supersonic reception element S2 along its rotation shaft SH100, thence coupled with casing H100 to serve to adjust and set the reception/emission orientation of the aforementioned emission elements and reception elements S100; or (2) a pitch adjustment setting means, exemplified in Fig. 42 is one such pitch adjustment setting means accommodating pitch adjustment of both emission orientation and reception orientation, represented by the reference number H201 it is mounted with an ultrared emission element 321', or supersonic emission element 322', or ultrared reception element S1 or supersonic reception element S2 along its rotation shaft SH100, thence coupled with casing H100 to serve to adjust and set the reception/emission orientation of the aforementioned emission elements and reception elements S100; or (3) an adjustment setting means accommodating spheroidal, universal directional adjustments, exemplified in Fig. 43 is one such adjustment setting means in its structural layout H202 mounted with an ultrared emission element 321', or supersonic emission element 322, or ultrared reception element S1, or supersonic reception element S2 along its spheroidal cockpit P100 for spheroidal, universal directional adjustments, said adjustment setting means H202 is thence coupled with the casing H100 to adjust and set the reception/emission orientation of aforementioned emission element and reception element S100; or (4) an ultrared or supersonic orientation deflection device capable of adjusting horizontal angle of inclusion, exemplified in Fig. 44 is one such device serving to adjust the angle of inclusion of horizontal deflection respecting both emission orientation and reception orientation, represented by the reference number H202, whereof the guide channel SL100 which incorporates an arched deflection lens L100 is mounted with an ultrared emission element 321', or supersonic emission element 322', or ultrared reception element S1 or supersonic reception element S2 so that adjustment of the angle of inclusion of horizontal deflection respecting any of the foregoing elements is made possible, the device H202 is then coupled with the casing H100, serving to adjust and set the emission/reception orientation of aforementioned emission elements and reception elements S100; or (5) an ultrared or supersonic orientation deflection device indicated for pitch adjustments, exemplified in Fig. 45 is one such device, represented by the reference number H202, by having an ultrared reception element 321', or supersonic emission element 322', or ultrared reception element S1, or supersonic reception element S2 installed thereon whereby pitch adjustment is made possible respecting any of these elements along its guide channel SL101 which incorporates an arched deflection lens L101, that followed by coupling with the casing H100, it is ready to effect adjustment and setting of the emission/reception oriencation of aforementioned emission elements and reception elements S100; or (6)an ultrared or supersonic orientation deflection device capable of spheroidal, universal directional adjustments such as the one exemplified in Fig. 46, represented by the reference number H202, it provides spheroidal, universal directional deflection adjustments respecting ultrared emission element 321', or supersonic emission element 322', or ultrared reception element S1 or supersonic reception element S2 which are all to be mounted thereto, the adjustments being made along the spheroidal cockpit P100 which incorporates a concave deflection lens L102, the device H202 is then coupled with the casing H100, serving to adjust and set the reception/emission orientation of aforementioned emission/reception element S100; overall, this adjustment or setting means or orientation deflection assembly further comprises a structural characteristic feature in that it can be installed way between an emission or reception assembly and the casing, or alternatively, way between a common structure embodying said assembly and an emission or reception ckt. provided on ultrared or supersonic wireless mouse or trackball device which by itself incorporates independent receiver.

Any execution of the invention, featuring the coupling of aforementioned mouse or trackball device capable of wireless coupling output, ultrared, supersonic or R.F., to the relay keyboard, will also find application in notebook computer which integrates the casing with the keyboard, so that the relay leader 13 is converted to be an internal liaison means interconnecting the casing with the keyboard, whereof one end is coupled to a radio receiver composed of an ultrared receiver or supersonic receiver or R.F. receiver R0, while the priorly mentioned receiver R0 is one supplied with conductor units to feed one or more set of ultrared sensors or supersonic sensors or R.F. sensors S0 installed on one or more sides of the keyboard of a notebook computer, said sensor S0 being available for parallel operation or alternatively selective operation by the intervention of a switch provided therefor. By the same token, the aforementioned one or more set of ultrared sensor or supersonic sensor S0 installed on one or more sides of said notebook computer keyboard may be installed with: push-pull type ultrared or supersonic blocking board IP101 (IP201), or snap-on type ultrared or supersonic blocking board IP102(IP202), or solenoidal suction type blocking board IP103(IP203), or closable ultrared or supersonic blocking board IP104(IP204) for coupling to the casing and as provided at the ultrared or supersonic access port of the casing, meant to selectively isolate part of said access port where practice as such is justified in view of operation environments, eventually and essentially to reduce interferences.

In summation, the invention assembly of independent mouse or trackball device using keyboard as an operational relay with keyboard is simply structured, easily controlled, and will truly resolve kink and mess on a desktop due to presence of redundant wires and leaders, eliminate component to component shielding and interference, in its assistance to simplify desktop environment, the invention is a worthy piece of innovation indeed.

All that which has been so far disclosed in the foregoing represents but certain non-limiting example of the invention meant to elucidate the technical contents of the invention with respect to which adaptation and variation is simply obvious to persons skilled in the art without departing from the spirit and scope of the invention.

As has been described, a compound system of assembly of independent mouse or trackball device using keyboard as an operational relay with keyboard, may be provided, whereof the operational relay is in the form of a keyboard set with wired or wireless output to run way between a mouse or trackball device serving wired or wireless transmission and the main unit of the receiver, with the mouse or trackball device from which wired and wireless output equally realizable being coupled to the keyboard meant for wired or wireless output, the coupling being available in a wired mode by direct coupling by means of conductor or photo guide means, or else by the intervention of plug/socket assembly, or alternatively in a wireless mode involving ultrared or supersonic or R.F. operation; or still as executed by floating coupling through mechanical frictional rolling displacement or sensitized displacement with respect to the keyboard, rather than structural assemblage, so that freedom as to separate utility, reduction in the number of leaders required, reduction in leader length required are achieved altogether, thereby eliminating disorder on the desktop owing to excess leaders as well as component-on-component shielding and interference.

There may be provided a wired coupling mode applied for the compound system of assembly of independent mouse or trackball device using keyboard as an operational relay with keyboard according to Claim 1, whereof the components consist essentially of:
- Relay keyboard 1, furnished with operation pushkey 10 serving the purpose of operational selections on the exterior, and a pushkey ckt. device 11 correspondent with each operation pushkey 10 on the interior, said pushkey ckt. device 11 being associated with main uni6 2 by means of keyboard transmission line 12;
- Relay leader 13: provided at a chosen location inside the relay keyboard 1, linked to the main unit 2 in a row in parallel with keyboard transmission wire 12 or by extension in common with a plural core cable, directly or by the intervention of plug/socket assembly; and also linked to relay leader 13 directly in parallel with, or by the intervention of interface coupling of one or more similar type or dissimilar type of conventional PS2, USB, SERIES or special purpose interface socket 14, on both sides of the relay keyboard 1, or at a chosen central position, or at a right side or left side of same relay keyboard 1;
- Independently furnished wired mouse or trackball device 31, of which the transmission wire 311 has one end provided with a plug 312 capable of coupling to aforementioned coupling socket 14.

The wired coupling between the mouse or trackball device may be executed either by conductor wire or photo guide conductor straight or by wired coupling of conductor plug with sockets.

Execution of ultrared wireless coupling may depend essentially on the following components:
- Relay keyboard 1: comprising exteriorly: operation pushkey 10 serving selective operation purposes, and interiorly: a pushkey ckt. device 11 correspondent with each operation pushkey 10 and which is connected to the main unit 2 by a keyboard transmission wire 12;
- Relay wire 13, located at a chosen position inside the relay keyboard 1, having one end thereof linked to the ultrared receiver R1, and the other end thereof to the main unit 2, either in a row in parallel with the keyboard transmission wire 12, or in common with a plural core cable, extended direct to, or by the intervention of plug/socket assembly, to the main unit 2; said receiver R1 being furnished with a conductor device 15 to supply one or more set of ultrared sensor S1 furnished on one side or both sides of the relay keyboard 1, said ultrared sensor S1 being available for parallel operation or selective operation through a switch provided for that purpose and which is to be furnished on a chosen edgewise wall of the relay keyboard 1 either in a concealed manner or plainly exposed, endowed with a suitable slope to accommodate coupling with signal that is being emitted from or received by an ultrared wireless mouse or trackball device 32 to be further described hereinafter;
- Independently installed ultrared wireless mouse or trackball device 32, which, in addition to constituting an ultrared emitter 321 composed of ultrared emission elements 321' in one set which consists directly of mainly LED parts, mounted at a chosen angular setting, may further incorporate one or more photo guide means 151 additionally on the casing of the ultrared wireless mouse or trackball device 32, so as to form two or more ultrared emission orientations; or alternatively on the casing of the ultrared wireless mouse or trackball device 32 there may be provided as additional one or more ultrared signal transmission/reception channel 162, so as to create two or more ultrared emission orientations; where needed there may be mounted two or more sets of ultrared emission elements 321' at a chosen angular setting on the ultrared wireless mouse or trackball device 32, sharing a common set of ultrared emitter 321; or instead one or more sets of separately provided ultrared emission elements 321' and ultrared emitters 321 being available for selective operation by the incorporation of a switch which therefore makes possible a parallel operation by switch either the ultrared emission elements 321' or the ultrared emitter 321 or both altogether simultaneously so that controlled operation from the right side or from the left side is consummated.

The relay keyboard 1 may have one side or both sides thereof furnished with a photo guide means 151 processed from photo conductive materials such as photo fibre, or luminescent boards into strips or pieces or otherwise geometric configurations, comprising one or more sets of photo guide hoods 16 present on one or both sides thereof, eventually linked to the correspondent ultrared sensor S1 for receiver R1, that is, incorporating one set of ultrared receiver R1 and one set of ultrared sensor S1, while on one or more sides of the same relay keyboard 1 are respectively furnished photo guide hood 16 which by the action of photo guide means 151 which is made from photo conductive materials is linked to a correspondent ultrared sensor S1, to facilitate the making of ultrared wireless coupling on the part of either an ultrared wireless mouse or trackball device 32.

The relay keyboard 1 further may be arranged so that two or more sets of ultrared receivers R1 and ultrared sensors S1 are concurrently disposed on both sides or more sides thereof, and executed to operate in parallel or selectively by the introduction of a switch.

The relay keyboard 1 may be composed of at least one set of common ultrared receiver R1 and a relative plural set of ultrared sensor S1, said ultrared sensor S1 being attached at a chosen angular setting to both sides or even more sides of the relay keyboard 1, and executable as required to operate in parallel with or selectively through a switch with respect to said ultrared receiver R1.

The photo guide hood 16 as related to the relay keyboard 1 may bear a further feature in that it is attached to a chosen side of the relay keyboard 1 at a chosen angular setting, and where required processed to yield an end profile having the function of a convergent lens, more recessed than the casing side so as to minimize interferences.

The relay keyboard may be arranged to have push-pull type ultrared blocking board IP101, or snap-on type ultrared blocking board IP102, or solenoidal suction type ultrared blocking board IP103 or closable ultrared blocking plug IP104 coupled to the ultrared access port thereof, so as to effect selective blocking of part of the access port in view of operational environments so that interference is kept to the minimum.

A chosen side or more sides of the relay keyboard 1 may be provided with an ultrared signal access channel 152 of which the inner wall exhibits deflection capabilities, on one or more than one chosen sides, so that, by coupling same to the ultrared sensor S1 as related to the ultrared receiver R1, it is made possible for signal from the emitter 321 of the ultrared wireless mouse or trackball device 32 to be emitted to above-mentioned ultrared signal access channel 152, so that wireless coupling is consummated with the ultrared sensor S1 as well as receiver R1 by the transmission on account of afore-mentioned deflection lens; said ultrared signal access channel 152 being available to be made in the form of a shell while the inner wall of same is vacuum plated into a deflection surface or spray finished with deflection paints or otherwise paintstuff, or else prepared by the inclusion or adhesion of deflective metal sheets, or any otherwise which will accommodate ultrared deflections.

The ultrared signal access channel 152 may have its opening processed into the form of a trumpet to facilitate setting of reception orientation thereby minimizing reception interferences.

The push-pull type ultrared blocking board IP101, or snap-on type ultrared blocking board IP102, or solenoidal suction type ultrared blocking board IP103, or closable ultrared blocking plug IP104 installed at the access port of the ultrared signal access channel 152 and meant for coupling with the casing may serve to partially block the access port where such is required in view of operation environments so as to minimize interferences.

The independently installed mouse or trackball device 32 may have push-pull type ultrared blocking board IP101, or snap-on type ultrared blocking board IP102, or solenoidal suction type ultrared blocking board IP103 or closable ultrared blocking plug IP104 mounted at each relevant access port, destined for coupling with casing, so as to effect partial blocking of the access port where required in view of operation environments so as to minimize interferences.

The system, as employed for supersonic wireless coupling purposes, may consist structurally of:
- Relay keyboard 1, which incorporates exteriorly pushkey 10 featuring selection capability, and interiorly a pushkey ckt. 11 which corresponds with each pushkey 10, said pushkey ckt.11 being linked by way of keyboard transmission leader 12 to the main unit 2;
- Relay leader 13, installed at a chosen location inside the relay keyboard 1, with one end linked to the supersonic receiver R2, and the other end, in a row in parallel with keyboard transmission wire 12, or in common with plural core cable, extended straight to the main unit 2 or by the intervention of plug/socket assembly thereto, said receiver R2 being complete with a conductor assembly 15 to feed one or more set of supersonic sensor S2 furnished on one or more side of the relay keyboard 1, the supersonic sensor S2 being available for parallel operation or selective operation by the intervention of a switch where required and which, as mounted on a chosen edgewise wall of the relay keyboard 1, may be concealed or exposed, and endowed with a proper slope where justified operationally, to accommodate the emission and reception of signal to and by supersonic wireless mouse or trackball device to be further described below;
- Independently installed supersonic wireless mouse or trackball device 32, which incorporates, in addition to one set of supersonic emitter 322 which comprises entirely all transducer supersonic emission elements 322', installed at a chosen angular setting; one or more additionally equipped sound guide means 161 on the casing of the supersonic wireless mouse or trackball device 32 so as to produce two or more supersonic emission orientation, or one or more supersonic signal access channel 162 is incorporated additionally on the casing of the supersonic wireless mouse or trackball device 32, so as to produce two or more supersonic emission orientations, and where required, on both sides in front of the supersonic wireless mouse or trackball device 32 may be furnished, at chosen angular settings, two or more transducer 322' and a common set of supersonic emitter 322, or one or more set of supersonic emitters 322 each equipped with respective transducer 322' available for parallel operation or selective operation by the introduction of a switch, the same is true as of the supersonic emitter 322, so as to facilitate controlled operation from the right side or from the left side.

The relay keyboard 1 may have a sound guide means 161, made of materials capable of transmitting sound waves, and in the form of strips or pieces or otherwise defined geometric configurations, supplied in one set or more sets, mounted on one or both sides thereof, for coupling to a correspondent supersonic sensor S2 forming part of the receiver R2, that is, thereby incorporate one set of supersonic receiver R2 and one set of supersonic sensor S2, while on one or more sides of the same relay keyboard 1 are respectively furnished sound wave transmission means 161 associated with the correspondent supersonic sensor S2, to facilitate wireless, supersonic coupling to which the supersonic wireless mouse or trackball device is a part.

The relay keyboard 1 may be concurrently flanked on both or more sides thereof with two or more sets of supersonic receiver R2 and supersonic sensor S2, and where required may be executed for parallel operation or selective operation by the introduction of a switch instead.

The relay keyboard 1 may be composed of at least one set of common supersonic receiver R2 and relatively plural set of supersonic sensor S1, and the afore-mentioned supersonic sensor S2 being installed at a chosen angular setting on both sides or more sides of same relay keyboard 1, and being available for execution in parallel operation or selective operation by the intervention of a switch in relation to supersonic receiver R2.

The sound transmission means 161 relevant to the relay keyboard 1 may be further characterized in being bound to a chosen side of the relay keyboard 1 at a chosen angular setting, and where required may be processed to yield an end profile with sound wave converging capabilities and mounted shrunk into a larger side of the casing.

The relay keyboard 1 may have a push-pull type ultrared blocking board IP201, or snap-on type ultrared blocking board IP202, or solenoidal suction type blocking board IP203 or closable supersonic blocking plug IP204, meant for coupling to the casing, installed at the supersonic access port of the casing, so as to effect partial blocking of said access port performed selectively to meet operational requirements where the circumstances so demand.

The relay keyboard 1 may have a supersonic signal access channel 162 of which the inner wall exhibits deflection capabilities furnished on a chosen side or more than one side thereof, meant for coupling to the supersonic sensor S2 which is part of the supersonic receiver R2, in order for signal that is being emitted from the emitter 322 for the supersonic wireless mouse or trackball device 32 to pass to said signal access channel 162 which by virtue of its deflection feature will consummate supersonic wireless coupling with said supersonic sensor S2 and receiver R2; the supersonic signal access channel 162 being available in the form of a shell and of which the inner wall is vacuum plated to yield a supersonic refraction surface or finished with supersonic refracting paintstuff or otherwise paintstuff, or prepared by the inclusion or adhesion of supersonic refracting metal sheets, or alternatively by any other method by which supersonic refraction is made possible.

The supersonic signal access channel 162 may have its opening aperture processed in the form of a crumpet to set reception orientation whereby interferences are kept to the minimum.

The access port of the supersonic signal access channel 162 may be furnished with a push-pull type supersonic blocking board IP201 or snap-on type supersonic blocking board IP202 or solenoidal suction type supersonic blocking board IP203 or closable supersonic blocking plug IP204 meant for coupling with the casing, so as to effect selective isolation of part of the access port in view of operation environments aimed at minimizing interferences.

The independently installed supersonic wireless mouse or trackball device 32 may have each of its many access ports furnished with a push-pull type supersonic blocking board IP201, or snap-on type blocking board IP202, or solenoidal suction type supersonic blocking board IP203 or closable supersonic blocking plug IP204 meant for coupling with the casing, so as to effect selective isolation of part of the access port in view of operation environments aimed at minimizing interferences.

When employed for wireless R.F. coupling, the system may comprise essentially:
- Relay keyboard 1 which incorporates functional pushkey 10 on the exterior, and a pushkey ckt. assembly 11 correspondent to said pushkey 10, and the pushkey ckt. assembly 11 being conveyed by a keyboard transmission leader 12 to the main unit 2;
- Relay leader 13, installed at a chosen location in the relay keyboard 1, with one end connected to an R.F. receiver R3, the other end connected, in a row in parallel with keyboard transmission leader 12, or in common with a plural core cable, to the main unit 2 straight or by the intervention of plug/socket assembly;
- Independently installed R.F. wireless mouse or trackball device 32 to which is mounted a wireless R.F. outputting emitter 323.

When embodied for wireless coupling of ultrared or supersonic or R.F., the structural layout may comprise: a wireless receiver R0 which consists of : ultrared receiver R1 incorporating ultrared sensor S1, or supersonic receiver R2 incorporating supersonic sensor S2, or wireless R.F. receiver R3, housed in a casing separate from the relay keyboard 1, and assembled to formation by locking, engagement, bondng, adhesion or similar techniques, connected to the relay wire 13 sourced to the relay keyboard 1 by means of similar or dissimilar types of conventional PS2, USB, SERIES or special purpose interface plug, socket assembly P0 or alternatively by wiring leader straight; or both may be embodied together on a common housing; said wireless relay keyboard 1 and receiver R0 being separate casings united together, with one side or both sides of the relay keyboard 1 reserved as special space but similar in structural pattern and topology to facilitate locking, engaging, matching, adhesion, fixing or fitting in order that once combined both the wireless mouse or trackball device 32 and the receiver R0 are brought about to a layout beneficial for wireless transmissions; the same principle is applied on integrated common casing.

When executed in an embodiment with the mouse or trackball device whereof output is executed by wired coupling to relay keyboard 1 or by wireless coupling, including ultrared or supersonic or R.F. coupling to the same relay keyboard 1, the relay keyboard 1 may be attached with one or more mouse padding structure 101, structured singly or by separable assemblage, severally or concurrently, on one side or both sides of a chosen angular setting, or on one or both sides of the keyboard proper, to serve as an operation platform for the independently equipped wireless mouse or trackball device 32.

The mouse padding structure 101 may be structurally correlated to the relay keyboard 1 by freely foldable execution so that the mouse padding structure 101 is movably articulated to a chosen side or both sides of the relay keyboard 1; or alternatively movably articulated to a chosen side or both sides of an edge on the lower wall of the relay keyboard 1.

When executed for wired coupling operations, the combination of the mouse padding structure 101 with the relay keyboard 1 in so far as the layout of the keyboard transmission wire 12, relay leader 13, coupling socket 14 or conductor assembly 15 is concerned in particular, may be characterized in that a coupling socket 14 provided singly or plurally, in parallel and on a chosen side or both sides or on a chosen middle position of the relay keyboard 1 is provided in symmetry with a plug 312 that is being deployed relevant to said wired mouse or trackball device.

When executed for ultrared wireless coupling operations, the characteristic feature may be that the ultrared receiver R1, including the ultrared sensor S1 is located symmetrically with the ultrared emitter provided for the wireless mouse or trackball device to form a coupling.

When executed for supersonic wireless coupling, the characteristic feature respecting the supersonic receiver R2 may be that, together with supersonic sensor S2, it is located symmetrically with the supersonic emitter provided for the wireless mouse or trackball device.

When executed for wireless R.F. coupling, the characteristic feature respecting the wireless R.F. receiver R3 may be that it is located symmetrically with the wireless R.F. emitter provided for the wireless mouse or trackball device to form a coupling.

When execution of said mouse padding structure 101 in service of wireless coupling of wired operation, ultrared or R.F. or supersonic operation, apart from employment of a plane structure, can be in the form of a uni-directionally recessed embankment board or of a two-way sunken structure, that in order for the ultrared or R.F. or supersonic emitter 321 or 322 or 323 to maintain excellent coupling with respect to ultrared or R.F. or supersonic R.F. sensor S1, S2, S3, to the extent that said ultrared or R.F. or supersonic emitter 321, 322 or 323 are laid out with the wireless mouse or trackball device working within their nominal limits, that the mouse padding structure 101 has a recessed, embankment structure on the periphery or is processed to yield a sunken embankment on the perimeter of both sides is meant to facilitate use on both sides, said one-piece mouse padding structure 101 may be attached to either side, right or left, of the relay keyboard 1 depending on a case by case basis.

A mouse padding structure 101 mounted on a chosen side of the relay keyboard 1 can be equipped with a retainer means 17 serving to retain in position an independently installed wired or wireless mouse or trackball 31, 32 which is to be fed by engagement therein, so that the mouse or trackball device may be retained in place anytime and casually.

The structural correlation between the mouse padding structure 101 and the relay keyboard 1 may be such that for one or more coupling holes 102 to be drilled on chosen locations on the panel of the independently erected mouse padding structure 101, to be inserted into one or more correspondingly provided coupling pillars 18 provided on edgewise wall of the bottom of the relay keyboard 1, thus forming a coupling.

In order to enhance the desirable interaction of transmission and reception between the functionally directional ultrared or supersonic wireless mouse or trackball device 32 and the correspondent receiver; it is advisable to provide for adjustment setting of reception/emission angles: (A) way between ultrared emission elements 321' or a common ckt. comprising it and the ultrared emitter 321, for one part, and the casing of the wireless mouse or trackball device 32, for another part; or (B) way between supersonic transducer 322' or a common ckt. comprising it and supersonic emitter 322, for one part, and the casing of the wireless mouse or trackball device 32, for another part; (C) way between ultrared sensor S1 or a common ckt. comprising it and ultrared receiver R1, for one part, and the relay keybarod 1 casing, for another part, or (D) way between supersonic sensor S2 or a common ckt. comprising it and supersonic receiver R2, for one part, and the relay keyboard 1 casing, for another part; or still way between ultrared sensor S1, for one part, or alternatively supersonic sensor S2, for one part, the relay keyboard 1 casing, for another part.

The means for adjustment setting of reception/emission angles can incorporate structure for adjustment setting of horizontal angle of inclusion H200 which provides for adjustment setting of ultrared emission elements 321' or supersonic emission elements 322' or ultrared reception elements S1 or supersonic reception elements S2 once any of these is established in place with respect to rotation shaft SH100, to follow that, coupling is made with the casing H100 so as to provide for adjustment and setting of aforementioned emission elements and reception elements S100 aimed at control of emission/reception orientations.

The means for adjustment setting of reception/emission angles incorporates means for pitch adjustment setting H201 with reference to the rotation shaft SH100 of which pitch adjustment of ultrared emission elements 321', or supersonic emission elements 322' or ultrared reception elements S1 or supersonic reception elements S2 once any of these is attached to said rotation shaft SH100 may be made possible, followed by coupling with the casing H100 to serve to adjust and set the orientation of emission/reception of aforementioned emission elements and reception elements S100.

The means for adjustment setting of reception/emission angles may incorporate means for spheroidal universal directional adjustments H202 along the spheroidal cockpit P100 of which spheroidal universal adjustments are realizable with respect to: ultrared emission elements 321' or supersonic emission elements 322' or ultrared reception elements S1 or supersonic reception elements S2 as established by attachment to said spheroidal cockpit P100, and that followed by coupling with the casing H100, serving to adjusting and setting the orientation of reception/emission of aforementioned emission elements and reception elements S100.

The means for adjustment setting of reception/emission angles may further incorporate ultrared or supersonic refraction means allowing for adjustments of horizontal angle of inclusion H202 along guide channel SL100 to which an arched refraction lens L100 is a part once ultrared emission elements 321', supersonic emission elements 322' or ultrared reception elements S1 or supersonic reception elements S2 is set into said guide channel SL100, to follow that, coupling with the casing H100 will suffice to adjust emission/reception orientation of aforementioned emission/reception elements S100 and to set same.

The means for adjustment setting of reception/emission angles may further incorporate ultrared or supersonic refraction means allowing for pitch adjustments H202, to allow for pitch adjustment along guide channel SL101 to which an arched refraction lens L101 is a part, with respect to ultrared reception elements S321', or supersonic emission elements 322', or ultrared reception elements S1 or supersonic reception elements S2 once any of these is attached firm to said guide channel SL101, to follow that, a coupling is formed with the casing H100 aimed at adjusting and setting the reception/emission orientation of aforementioned emission/reception elements S100.

The means for adjustment setting of emission/reception angles may further incorporate means of ultrared or supersonic refraction permissible for spheroidal universal adjustments H202 whereby spheroidal universal refraction adjustments are made possible with reference to spheroidal cockpit P100, and that with respect to ultrared emission elements 321' or supersonic emission elements 322' or ultrared reception elements S1 or supersonic reception elements S2 once any of them is mounted into said spheroidal cockpit P100 which is equipped with a convex refraction lens L102, and that followed by coupling with the casing H100 for adjustment and setting of aforementioned emission/reception elements S100.

Functionally, said means of adjustment setting of emission/reception angles may be structured for application in being furnished way between a composite or compound assembly embodying emission or reception elements or emitter or receiver such as those installed on independently existent, albeit conventional, ultrared, supersonic, wireless mouse or trackball device or keyboards, and the casing, that is, that housing or the overall assembly.

Various instances executed covering the coupling of mouse or trackball device as the output of ultrared or supersonic or wireless R.F. wireless coupling modes to the relay keyboard is further available for application in notebook computers featuring the embodiment of casing with keyboard together, whereby the relay leader 13 is converted into casing to keyboard internal link, with one end connected such a wireless receiver R0 as consists of ultrared receiver, supersonic receiver or wireless R.F. receiver, said receiver R0 being furnished with conductor assembly to feed to one or more set of ultrared sensor or supersonic sensor or wireless R.F. sensor S0 provided on one or more sides of the keyboard of the notebook computer, said sensor S0 being available for parallel operation or selective operation by the intervention of a switch for that purpose.

One or more set of ultrared sensor or supersonic sensor S0 furnished on one or more sides of the notebook computer may be further equipped with push-pull type ultrared or supersonic blocking board IP101(IP201), or snap-on type ultrared or supersonic blocking board IP102(IP202), or solenoidal suction type ultrared or supersonic blocking board IP103(IP203) or closable ultrared or supersonic blocking board IP104(IP204) as coupled to the casing and located about the ultrared or supersonic access port on the same casing, so that partial blocking or said access port may be prosecuted in view of operation environments aimed at minimizing interferences.

## Claims

1. A compound system of assembly of independent mouse or trackball device using keyboard as an operational relay with keyboard, whereof the operational relay is in the form of a keyboard set with wired or wireless output to run way between a mouse or trackball device serving wired or wireless transmission and the main unit of the receiver, with the mouse or trackball device from which wired and wireless output equally realizable being coupled to the keyboard meant for wired or wireless output, the coupling being available in a wired mode by direct coupling by means of conductor or photo guide means, or else by the intervention of plug/socket assembly, or alternatively in a wireless mode involving ultrared or supersonic or P.F. operation; or still as executed by floating coupling through mechanical frictional rolling displacement or sensitized displacement with respect to the keyboard, rather than structural assemblage, so that freedom as to separate utility, reduction in the number of leaders required, reduction in leader length required are achieved altogether, thereby eliminating disorder on the desktop owing to excess leaders as well as component-on-component shielding and interference.

2. Wired coupling mode applied for the compound system of assembly of independent mouse or trackball device using keyboard as an operational relay with keyboard according to Claim 1, whereof the components consist essentially of:
- Relay keyboard 1, furnished with operation pushkey 10 serving the purpose of operational selections on the exterior, and a pushkey ckt. device 11 correspondent with each operation pushkey 10 on the interior, said pushkey ckt. device 11 being associated with main uni6 2 by means of keyboard transmission line 12;
- Relay leader 13: provided at a chosen location inside the relay keyboard 1, linked to the main unit 2 in a row in parallel with keyboard transmission wire 12 or by extension in common with a plural core cable, directly or by the intervention of plug/socket assembly; and also linked to relay leader 13 directly in parallel with, or by the intervention of interface coupling of one or more similar type or dissimilar type of conventional PS2, USB, SERIES or special purpose interface socket 14, on both sides of the relay keyboard 1, or at a chosen central position, or at a right side or left side of same relay keyboard 1;
- Independently furnished wired mouse or trackball device 31, of which the transmission wire 311 has one end provided with a plug 312 capable of coupling to aforementioned coupling socket 14.

3. Compound system of assembly of independent mouse or trackball device using keyboard as an operational relay with keyboard according to Claim 1, whereof the wired coupling between said mouse or trackball device and is executed either by conductor wire or photo guide conductor straight or by wired coupling of conductor plug with sockets.

4. Compound system of assembly of independent mouse or trackball device using keyboard as an operational relay with keyboard according to Claim 1, whereof execution of ultrared wireless coupling depends essentially on the following components:
- Relay keyboard 1: comprising exteriorly: operation pushkey 10 serving selective operation purposes, and interiorly: a pushkey ckt. device 11 correspondent with each operation pushkey 10 and which is connected to the main unit 2 by a keyboard transmission wire 12;
- Relay wire 13, located at a chosen position inside the relay keyboard 1, having one end thereof linked to the ultrared receiver R1, and the other end thereof to the main unit 2, either in a row in parallel with the keyboard transmission wire 12, or in common with a plural core cable, extended direct to, or by the intervention of plug/socket assembly, to the main unit 2; said receiver R1 being furnished with a conductor device 15 to supply one or more set of ultrared sensor S1 furnished on one side or both sides of the relay keyboard 1, said ultrared sensor S1 being available for parallel operation or selective operation through a switch provided for that purpose and which is to be furnished on a chosen edgewise wall of the relay keyboard 1 either in a concealed manner or plainly exposed, endowed with a suitable slope to accommodate coupling with signal that is being emitted from or received by an ultrared wireless mouse or trackball device 32 to be further described hereinafter;
- Independently installed ultrared wireless mouse or trackball device 32, which, in addition to constituting an ultrared emitter 321 composed of ultrared emission elements 321' in one set which consists directly of mainly LED parts, mounted at a chosen angular setting, may further incorporate one or more photo guide means 151 additionally on the casing of the ultrared wireless mouse or trackball device 32, so as to form two or more ultrared emission orientations; or alternatively on the casing of the ultrared wireless mouse or trackball device 32 there may be provided as additional one or more ultrared signal transmission/reception channel 162, so as to create two or more ultrared emission orientations; where needed there may be mounted two or more sets of ultrared emission elements 321' at a chosen angular setting on the ultrared wireless mouse or trackball device 32, sharing a common set of ultrared emitter 321; or instead one or more sets of separately provided ultrared emission elements 321' and ultrared emitters 321 being available for selective operation by the incorporation of a switch which therefore makes possible a parallel operation by switch either the ultrared emission elements 321' or the ultrared emitter 321 or both altogether simultaneously so that controlled operation from the right side or from the left side is consummated.

5. Compound system of assembly of independent mouse or trackball device using keyboard as an operational relay with keyboard, as according to Claim 4, whereof said relay keyboard 1 may have one side or both sides thereof furnished with a photo guide means 151 processed from photo conductive materials such as photo fibre, or luminescent boards into strips or pieces or otherwise geometric configurations, comprising one or more sets of photo guide hoods 16 present on one or both sides thereof, eventually linked to the correspondent ultrared sensor S1 for receiver R1, that is, incorporating one set of ultrared receiver R1 and one set of ultrared sensor S1, while on one or more sides of the same relay keyboard 1 are respectively furnished photo guide hood 16 which by the action of photo guide means 151 which is made from photo conductive materials is linked to a correspondent ultrared sensor S1, to facilitate the making of ultrared wireless coupling on the part of either an ultrared wireless mouse or trackball device 32.

6. Compound system of assembly of independent mouse or trackball device using keyboard as an operational relay with keyboard according to Claim 4, whereof said relay keyboard 1 further may be arranged so that two or more sets of ultrared receivers R1 and ultrared sensors S1 are concurrently disposed on both sides or more sides thereof, and executed to operate in parallel or selectively by the introduction of a switch.

7. Compound system of assembly of independent mouse or trackball device using keyboard as an operational relay with keyboard according to Claim 4, whereof said relay keyboard 1 is composed of at least one set of common ultrared receiver R1 and a relative plural set of ultrared sensor S1, said ultrared sensor S1 being attached at a chosen angular setting to both sides or even more sides of the relay keyboard 1, and executable as required to operate in parallel with or selectively through a switch with respect to said ultrared receiver R1.

8. Compound system of assembly of independent mouse or trackball device using keyboard as an operational relay with keyboard according to Claim 4, Claim 5, Claim 6, or Claim 7, whereof said photo guide hood 16 as related to the relay keyboard 1 bears a further feature in that it is attached to a chosen side of the relay keyboard 1 at a chosen angular setting, and where required processed to yield an end profile having the function of a convergent lens, more recessed than the casing side so as to minimize interferences.

9. Compound system of assembly of independent mouse or trackball device using keyboard as an operational relay with keyboard according to Claim 4, whereof the relay keyboard may be arranged to have push-pull type ultrared blocking board IP101, or snap-on type ultrared blocking board IP102, or solenoidal suction type ultrared blocking board IP103 or closable ultrared blocking plug IP104 coupled to the ultrared access port thereof, so as to effect selective blocking of part of the access port in view of operational environments so that interference is kept to the minimum.

10. Compound system of assembly of independent mouse or trackball device using keyboard as an operational relay with keyboard according to Claim 4, whereof a chosen side or more sides of the relay keyboard 1 is provided with an ultrared signal access channel 152 of which the inner wall exhibits deflection capabilities, on one or more than one chosen sides, so that, by coupling same to the ultrared sensor S1 as related to the ultrared receiver R1, it is made possible for signal from the emitter 321 of the ultrared wireless mouse or trackball device 32 to be emitted to above-mentioned ultrared signal access channel 152, so that wireless coupling is consummated with the ultrared sensor S1 as well as receiver R1 by the transmission on account of afore-mentioned deflection lens; said ultrared signal access channel 152 being available to be made in the form of a shell while the inner wall of same is vacuum plated into a deflection surface or spray finished with deflection paints or otherwise paintstuff, or else prepared by the inclusion or adhesion of deflective metal sheets, or any otherwise which will accommodate ultrared deflections.

11. Compound system of assembly of independent mouse or trackball device using keyboard as an operational relay with keyboard according to Claim 10, whereof the ultrared signal access channel 152 may have its opening processed into the form of a trumpet to facilitate setting of reception orientation thereby minimizing reception interferences.

12. Compound system of assembly of independent mouse or trackball device using keyboard as an operational relay with keyboard according to Claim 10, whereof the push-pull type ultrared blocking board IP101, or snap-on type ultrared blocking board IP102, or solenoidal suction type ultrared blocking board IP103, or closable ultrared blocking plug IP104 installed at the access port of the ultrared signal access channel 152 and meant for coupling with the casing may serve to partially block the access port where such is required in view of operation environments so as to minimize interferences.

13. Compound system of assembly of independent mouse or trackball device using keyboard as an operational relay with keyboard according to Claim 4, whereof said independently installed mouse or trackball device 32 may have push-pull type ultrared blocking board IP101, or snap-on type ultrared blocking board IP102, or solenoidal suction type ultrared blocking board IP103 or closable ultrared blocking plug IP104 mounted at each relevant access port, destined for coupling with casing, so as to effect partial blocking of the access port where required in view of operation environments so as to minimize interferences.

14. Compound system of assembly of independent mouse or trackball device using keyboard as an operational relay with keyboard according to Claim 1, which, as employed for supersonic wireless coupling purposes, consists structurally of:
- Relay keyboard 1, which incorporates exteriorly pushkey 10 featuring selection capability, and interiorly a pushkey ckt. 11 which corresponds with each pushkey 10, said pushkey ckt.11 being linked by way of keyboard transmission leader 12 to the main unit 2;
- Relay leader 13, installed at a chosen location inside the relay keyboard 1, with one end linked to the supersonic receiver R2, and the other end, in a row in parallel with keyboard transmission wire 12, or in common with plural core cable, extended straight to the main unit 2 or by the intervention of plug/socket assembly thereto, said receiver R2 being complete with a conductor assembly 15 to feed one or more set of supersonic sensor S2 furnished on one or more side of the relay keyboard 1, the supersonic sensor S2 being available for parallel operation or selective operation by the intervention of a switch where required and which, as mounted on a chosen edgewise wall of the relay keyboard 1, may be concealed or exposed, and endowed with a proper slope where justified operationally, to accommodate the emission and reception of signal co and by supersonic wireless mouse or trackball device to be further described below;
- Independently installed supersonic wireless mouse or trackball device 32, which incorporates, in addition to one set of supersonic emitter 322 which comprises entirely all transducer supersonic emission elements 322', installed at a chosen angular setting; one or more additionally equipped sound guide means 161 on the casing of the supersonic wireless mouse or trackball device 32 so as to produce two or more supersonic emission orientation, or one or more supersonic signal access channel 162 is incorporated additionally on the casing of the supersonic wireless mouse or trackball device 32, so as to produce two or more supersonic emission orientations, and where required, on both sides in front of the supersonic wireless mouse or trackball device 32 may be furnished, at chosen angular settings, two or more transducer 322' and a common set of supersonic emitter 322, or one or more set of supersonic emitters 322 each equipped with respective transducer 322' available for parallel operation or selective operation by the introduction of a switch, the same is true as of the supersonic emitter 322, so as to facilitate controlled operation from the right side or from the left side.

15. Compound system of assembly of independent mouse or trackball device using keyboard as an operational relay with keyboard according to Claim 14, whereof said relay keyboard 1 may have a sound guide means 161, made of materials capable of transmitting sound waves, and in the form of scrips or pieces or otherwise defined geometric configurations, supplied in one set or more sets, mounted on one or both sides thereof, for coupling to a correspondent supersonic sensor S2 forming part of the receiver R2, that is, thereby incorporate one set of supersonic receiver R2 and one set of supersonic sensor S2, while on one or more sides of the same relay keyboard 1 are respectively furnished sound wave transmission means 161 associated with the correspondent supersonic sensor S2, to facilitate wireless, supersonic coupling to which the supersonic wireless mouse or trackball device is a part.

16. Compound system of assembly of independent mouse or trackball device using keyboard as an operational relay with keyboard according to Claim 14, whereof the relay keyboard 1 is concurrently flanked on both or more sides thereof with two or more sets of supersonic receiver R2 and supersonic sensor S2, and where required may be executed for parallel operation or selective operation by the introduction of a switch instead.

17. Compound system of assembly of independent mouse or trackball device using keyboard as an operational relay with keyboard according to Claim 14, whereof said relay keyboard 1 is composed of at least one set of common supersonic receiver R2 and relatively plural set of supersonic sensor S1, and the afore-mentioned supersonic sensor S2 being installed at a chosen angular setting on both sides or more sides of same relay keyboard 1, and being available for execution in parallel operation or selective operation by the intervention of a switch in relation to supersonic receiver R2.

18. Compound system of assembly of independent mouse or trackball device using keyboard as an operational relay with keyboard according to Claim 14, whereof said sound transmission means 161 relevant to the relay keyboard 1 is further **characterized in** being bound to a chosen side of the relay keyboard 1 at a chosen angular setting, and where required may be processed to yield an end profile with sound wave converging capabilities and mounted shrunk into a larger side of the casing.

19. Compound system of assembly of independent mouse or trackball device using keyboard as an operational relay with keyboard according to Claim 14, whereof said relay keyboard 1 has push-pull type ultrared blocking board IP201, or snap-on type ultrared blocking board IP202, or solenoidal suction type blocking board IP203 or closable supersonic blocking plug IP204, meant for coupling to the casing, installed at the supersonic access port of the casing, so as to effect partial blocking of said access port performed selectively to meet operational requirements where the circumstances so demand.

20. Compound system of assembly of independent mouse or trackball device using keyboard as an operational relay with keyboard according to Claim 14, whereof said relay keyboard 1 has a supersonic signal access channel 162 of which the inner wall exhibits deflection capabilities furnished on a chosen side or more than one side thereof, meant for coupling to the supersonic sensor S2 which is part of the supersonic receiver R2, in order for signal that is being emitted from the emitter 322 for the supersonic wireless mouse or trackball device 32 to pass to said signal access channel 162 which by virtue of its deflection feature will consummate supersonic wireless coupling with said supersonic sensor S2 and receiver R2; the supersonic signal access channel 162 being available in the form of a shell and of which the inner wall is vacuum plated to yield a supersonic refraction surface or finished with supersonic refracting paintstuff or otherwise paintstuff, or prepared by the inclusion or adhesion of supersonic refracting metal sheets, or alternatively by any other method by which supersonic refraction is made possible.

21. Compound system of assembly of independent mouse or trackball device using keyboard as an operational relay with keyboard according to Claim 20, whereof said supersonic signal access channel 162 may have its opening aperture processed in the form of a trumpet to set reception orientation whereby interferences are kept to the minimum.

22. Compound system of assembly of independent mouse or trackball device using keyboard as an operational relay wich keyboard according to Claim 20, whereof the access port of the supersonic signal access channel 162 is furnished with a push-pull type supersonic blocking board IP201 or snap-on type supersonic blocking board IP202 or solenoidal suction type supersonic blocking board IP203 or closable supersonic blocking plug IP204 meant for coupling with the casing, so as to effect selective isolation of part of the access port in view of operation environments aimed at minimizing interferences.

23. Compound system of assembly of independent mouse or trackball device using keyboard as an operational relay with keyboard according to Claim 14, whereof the independently installed supersonic wireless mouse or trackball device 32 has each of its many access ports furnished with a push-pull type supersonic blocking board IP201, or snap-on type blocking board IP202, or solenoidal suction type supersonic blocking board IP203 or closable supersonic blocking plug IP204 meant for coupling with the casing, so as to effect selective isolation of part of the access port in view of operation environments aimed at minimizing interferences.

24. Compound system or assembly of independent mouse or trackball device using keyboard as an operational relay with keyboard according to Claim 1, where employed for wireless R.F. coupling, the system comprises essentially:
- Relay keyboard 1 which incorporates functional pushkey 10 on the exterior, and a pushkey ckt. assembly 11 correspondent to said pushkey 10, and the pushkey ckt. assembly 11 being conveyed by a keyboard transmission leader 12 to the main unit 2;
- Relay leader 13, installed at a chosen location in the relay keyboard 1, with one end connected to an R.F. receiver R3, the other end connected, in a row in parallel with keyboard transmission leader 12, or in common with a plural core cable, to the main unit 2 straight or by the intervention of plug/socket assembly;
- Independently installed R.F. wireless mouse or trackball device 32 to which is mounted a wireless R.F. outputting emitter 323.

25. Compound system of assembly of independent mouse or trackball device using keyboard as an operational relay with keyboard according to Claim 1, embodied for wireless coupling of ultrared or supersonic or R.F., the structural layout comprises: a wireless receiver R0 which consists of : ultrared receiver R1 incorporating ultrared sensor S1, or supersonic receiver R2 incorporating supersonic sensor S2, or wireless R.F. receiver R3, housed in a casing separate from the relay keyboard 1, and assembled to formation by locking, engagement, bonding, adhesion or similar techniques, connected to the relay wire 13 sourced to the relay keyboard 1 by means of similar or dissimilar types of conventional PS2, USB, SERIES or special purpose interface plug, socket assembly P0 or alternatively by wiring leader straight; or both may be embodied together on a common housing; said wireless relay keyboard 1 and receiver R0 being separate casings united together, with one side or both sides of the relay keyboard 1 reserved as special space but similar in structural pattern and topology to facilitate locking, engaging, matching, adhesion, fixing or fitting in order that once combined both the wireless mouse or trackball device 32 and the receiver R0 are brought about to a layout beneficial for wireless transmissions; the same principle is applied on integrated common casing.

26. Compound system of assembly of independent mouse or trackball device using keyboard as an operational relay with keyboard according to Claim 1 or Claim 4 or Claim 14, whereof various instances executed covering the coupling of mouse or trackball device as the output of ultrared or supersonic or wireless R.F. wireless coupling modes to the relay keyboard is further available for application in notebook computers featuring the embodiment of casing with keyboard together, whereby the relay leader 13 is converted into casing to keyboard internal link, with one end connected such a wireless receiver R0 as consists of ultrared receiver, supersonic receiver or wireless R.F. receiver, said receiver R0 being furnished with conductor assembly to feed to one or more set of ultrared sensor or supersonic sensor or wireless R.F. sensor S0 provided on one or more sides of the keyboard of the notebook computer, said sensor S0 being available for parallel operation or selective operation by the intervention of a switch for that purpose.

27. Compound system of assembly of independent mouse or trackball device using keyboard as an operational relay with keyboard according to Claim 26, whereof said one or more set of ultrared sensor or supersonic sensor S0 furnished on one or more sides of the notebook computer may be further equipped with push-pull type ultrared or supersonic blocking board IP101(IP201), or snap-on type ultrared or supersonic blocking board IP102(IP202), or solenoidal suction type ultrared or supersonic blocking board IP103(IP203) or closable ultrared or supersonic blocking board IP104(IP204) as coupled to the casing and located about the ultrared or supersonic access port on the same casing, so that partial blocking or said access port may be prosecuted in view of operation environments aimed at minimizing interferences.
